Europäisches Patentamt

European Patent Office

Office européen des brevets

(19)

(11) Publication number: 0 365 025
A2

# (12) EUROPEAN PATENT APPLICATION

(21) Application number: 89119508.3

(22) Date of filing: 20.10.89

(51) Int. Cl.5: G21C 3/328 , G21C 3/322 , G21C 7/26

(30) Priority: 21.10.88 JP 263961/88

(43) Date of publication of application:
25.04.90 Bulletin 90/17

(84) Designated Contracting States:
DE FR IT SE

(71) Applicant: HITACHI, LTD.
6, Kanda Surugadai 4-chome
Chiyoda-ku Tokyo 101(JP)

(72) Inventor: Yamashita, Junichi
1-30-3, Nakamaru-cho
Hitachi-shi Ibaraki-ken(JP)
Inventor: Ueki, Taro
3-2-1, Jyonan-cho
Hitachi-shi Ibaraki-ken(JP)
Inventor: Ozawa, Michihiro
2-24-6, Mikanohara-cho
Hitachi-shi Ibaraki-ken(JP)

(74) Representative: Patentanwälte Beetz sen. -
Beetz jun. Timpe - Siegfried -
Schmitt-Fumian- Mayr
Steinsdorfstrasse 10
D-8000 München 22(DE)

(54) Fuel assembly, spectral shift rod, nuclear reactor and power control method for nuclear reactor.

(57) A fuel assembly (1) comprises a plurality of fuel rods (4) which are respectively arrayed in first and second square lattices (7A, 7B). The fuel rods (4) included in the first square lattice array are arranged among the fuel rods included in the different or second square lattice array. Each of the fuel rods (4) has both its end parts supported by an upper tie plate (2) and a lower tie plate (3), respectively.

A spectral shift rod (40) which is cruciform in cross section has its cruciform side ends opposed to the corner parts of the fuel assembly (1). The spectral shift rod includes a coolant raising path (41) which is open below the fuel holding portion of the lower tie plate, and a coolant lowering path (42) which is open above the fuel holding portion. The coolant lowering path (42) communicates at its upper end with the upper end of the coolant raising path (41).

FIG. 1

## Fuel Assembly, Spectral Shift Rod, Nuclear Reactor and Power Control Method for Nuclear Reactor

Background of the Invention:

The present invention relates to a fuel assembly, a spectral shift rod, a nuclear reactor and a power control method for a nuclear reactor.

A new fuel assembly the degree of burnup of which is zero, is inserted in the core of a nuclear reactor for a predetermined period and is taken out of the reactor as a spent fuel assembly after its lifetime has been reached.

At present, it is contrived to prolong the period of the lifetime of the fuel assembly, that is, to increase the degree of burnup at the lifetime. As one measure for increasing the degree of burnup, it has been proposed to enlarge an enrichment at the peripheral part of the fuel assembly, as disclosed in the official gazette of Japanese Patent Application Laid-open No. 58-26292. Besides, as disclosed in the official gazette of Japanese Patent Application Laid-open No. 62-217186, there has been proposed a fuel assembly wherein fuel rods are arranged in 9 rows x 9 columns and wherein seven of the fuel rods at the central part of the fuel assembly are removed and are replaced with two water rods of larger diameter. Further, U. S. P. 4,585,614 discloses a fuel assembly having four fuel subassemblies, wherein fuel rods are arrayed in a square lattice at the central part of one of the fuel subassemblies not facing a cruciform control rod in the state in which the reactor core is loaded with such fuel assemblies, while they are arrayed in a regular triangle lattice at the peripheral part thereof.

According to the fuel assembly disclosed in U. S. P. 4,585,614, the fuel rod array in the square lattice is done at the central part, while the fuel rod array in the regular triangle lattice is done at the peripheral part, so that the fuel rods are densely arrayed at the peripheral part of the fuel subassembly. This diminishes the ratio (H/U) between the number of atoms of hydrogen and the number of atoms of uranium at the peripheral part. Therefore, the power peaking decreases at the peripheral part of the fuel subassembly.

The increase in the degree of burnup can be achieved by heightening the enrichment. In case of employing the fuel rod arrays of the fuel subassembly in U. S. P. 4,585,614 mentioned above, the H/U ratio at the peripheral part diminishes, and hence, the effect of the increase in the degree of burnup owing to the heightened enrichment cannot be sufficiently demonstrated.

Summary of the Invention:

The first object of the present invention is to provide a fuel assembly which can achieve increases in the thermal margin and output peaking at the peripheral part of the fuel assembly by the use of simple arrays of fuel rods.

The second object of the present invention is to provide a fuel assembly, a spectral shift rod and a nuclear reactor which can decrease the number of control rod operations.

The third object of the present invention is to provide a fuel assembly and a nuclear reactor which can render the lifetime of a control rod the longest.

The fourth object of the present invention is to provide a fuel assembly which can enhance the effect of spectral shift.

The fifth object of the present invention is to provide a fuel assembly which can efficiently cool the side wall of a coolant path located in a spectral shift rod.

The sixth object of the present invention is to provide a power control method for a nuclear reactor by which the number of control rod operations can be decreased.

The first feature of the present invention for accomplishing the first object thereof consists in that fuel rods are in an array configured of a combination of a plurality of square lattice arrays thereof which are substantially parallel to side surfaces of a lower tie plate, and that the fuel rod included in one of said square lattice arrays is arranged between the fuel rods included in another of said square lattice arrays.

According to the first feature of the present invention, the fuel rods are in the array configured of the combination of the plurality of square lattice arrays thereof which are substantially parallel to the side surfaces of the lower tie plate, and the fuel rod included in one of said square lattice arrays is arranged between the fuel rods included in another of said square lattice arrays, so that a coolant flow passage area at the peripheral part of the fuel assembly can be increased by the simple fuel rod arrays of square lattices. The increase of the coolant flow passage area at the peripheral part leads to increases in the thermal margin and the output peaking, thereby to enhance the fuel economy of the fuel assembly. Moreover, according to the first feature of the present invention, the cross-sectional area of the fuel assembly does not increase, and the effect of cooling the fuel rods at the central part of the fuel assembly does not lower, either.

The second feature of the present invention consists in that a spectral shift rod is comprised including a coolant raising path which is open below a fuel rod supporting portion of a lower tie plate and extends above it, as well as a coolant lowering path which is open above said fuel rod supporting portion, which is smaller in the coolant flow passage area than said coolant raising path and which guides downwards a coolant guided by said coolant raising path, whereby the aforementioned second object is accomplished.

According to the second feature of the present invention, the spectral shift rod is comprised including the coolant raising path and the coolant lowering path which is smaller in the coolant flow passage area than the coolant raising path, so that the coolant flow passage area of the coolant raising path in the spectral shift rod is larger, thereby making it possible to enlarge change in the void fraction within the spectral shift rod. Consequently, control rod operations required for a reactor power control can be decreased in number.

The third feature of the present invention for accomplishing the third object thereof consists in making the coolant flow passage area of the coolant raising path larger than 25 times that of the coolant lowering path.

According to the third feature of the present invention, the coolant flow passage area of the coolant raising path is made larger than 25 times that of the coolant lowering path, so that a region in which the pressure difference between the inlet and outlet of the spectral shift rod is proportional to the void fraction within the spectral shift rod can be rendered the largest. This can shorten to the utmost the period for which a control rod is inserted in a reactor core, and can lengthen the lifetime of the control rod to the utmost.

The fourth feature of the present invention for accomplishing the fourth object thereof consists in that the spectral shift rod has a cruciform cross section, and that side ends thereof are directed toward the fuel rods located at corner parts of the fuel assembly.

According to the fourth feature of the present invention, the cross section of the spectral shift rod is cruciform, and the side ends thereof are directed toward the fuel rods located at the corner parts of the fuel assembly, so that the cross-sectional area of the spectral shift rod can be enlarged, while the number of fuel rods to adjoin the spectral shift rod can be increased.

The fifth feature of the present invention consists in that the spectral shift rod includes a member in which the coolant lowering path is formed, and blades which are attached to said member so as to extend in four directions and in which the coolant raising path is formed, whereby the aforementioned fifth object can be accomplished.

According to the fifth feature of the present invention, the spectral shift rod includes the member which is formed therein with the coolant lowering path, and the blades which are attached to the member so as to extend in the four directions and which are formed therein with the coolant raising path, so that the side walls of the coolant lowering path located within the spectral shift rod can be efficiently cooled by a coolant which flows outside the spectral shift rod.

The sixth object of the present invention, namely, the sixth feature thereof is accomplished in such a way that a reactor power is controlled by withdrawal of control rods inserted in a reactor core, and that it is controlled by adjustments of liquid levels of the coolant formed in the spectral shift rods, not by the operation of withdrawing said control rods, after the reactor power control operation based on the withdrawal of said control rods has ended.

According to the sixth feature of the present invention, the coolant flow passage area of the coolant raising path in the spectral shift rod is large, so that change in the void fraction within the spectral shift rod can be enlarged. After the end of the reactor power control operation based on the withdrawal of the control rods, therefore, the reactor power is permitted to be controlled by the adjustments of the liquid levels of the coolant formed in the spectral shift rods, not by the operation of withdrawing the control rods, whereby the number of the control rod operations in the reactor power control can be decreased.

Brief Description of the Drawings:

Fig. 1 shows the cross section of a fuel assembly being one preferred embodiment of the present invention, and is a sectional view taken along I - I in Fig. 2;

Fig. 2 is a vertical sectional view of the fuel assembly in Fig. 1;

Fig. 3A is an explanatory diagram showing the coolant flow passage area of the peripheral part of the fuel assembly in Fig. 1, while Fig. 3B is an explanatory diagram showing the coolant flow passage area of the peripheral part of a prior-art fuel assembly in which fuel rods are arrayed in 9 rows x 9 columns;

Fig. 4 is a graph showing the relations between the ratio of H/U and the infinite multiplication factor with respect to enrichment factors;

Fig. 5 is a cross-sectional view of a fuel assembly which is another embodiment of the present invention;

Fig. 6A is an explanatory diagram showing a coolant flow passage area at the peripheral part of the fuel assembly in Fig. 5, while Fig. 6B is an explanatory diagram showing the coolant flow passage area at the peripheral part of the fuel assembly in Fig. 1;

Fig. 7 is a view of the model structure of a spectral shift rod (hereinbelow, abbreviated to "SSR");

Fig. 8 is a graph showing the relation between the pressure difference of the inlet and outlet of the SSR and the average void fraction in the SSR;

Figs. 9A, 9B and 9C are explanatory diagrams showing state changes within the SSR during the operation of a nuclear reactor;

Fig. 10A is a vertical sectional view of the SSR, Fig. 10B is a cross-sectional view taken along $X_1$ - $X_1$ in Fig. 10A, and Fig. 10C is a cross-sectional view taken along $X_2$ - $X_2$ in Fig. 10A;

Figs. 11 and 12 are graphs each showing the relations between the average void fraction in the SSR and the pressure difference of the inlet and outlet of the SSR, with the inner diameter of an inner tube taken as a parameter;

Figs. 13 and 14 are graphs each showing the relation between the average void fraction in the SSR and the pressure difference of the inlet and outlet of the SSR, with the total length of the SSR taken as a parameter;

Fig. 15 is a vertical sectional view of a fuel assembly which is another embodiment of the present invention;

Fig. 16 is a sectional view taken along $X_3$ - $X_3$ in Fig. 15;

Fig. 17 is an expanded view of a part $X_6$ in Fig. 16;

Fig. 18 is a sectional view taken along $X_5$ - $X_5$ in Fig. 16;

Fig. 19 is a vertical sectional view of a nuclear reactor which is loaded with the fuel assemblies as shown in Fig. 15;

Fig. 20 is an explanatory diagram showing a method of operating the nuclear reactor in Fig. 19;

Fig. 21 is a graph showing the variation of the infinite multiplication factor dependent upon the cross-sectional area of the SSR;

Fig. 22, Fig. 23, Figs. 31 - 33, Fig. 35 and Fig. 36 are cross-sectional views each showing a fuel assembly which is another embodiment of the present invention;

Fig. 24 is an expanded view of a part $X_7$ in Fig. 23;

Fig. 25 shows the cross section of a fuel assembly being another embodiment of the present invention, and is a sectional view taken along $X_8$ -$X_8$ in Fig. 26;

Fig. 26 is a sectional view taken along $X_9$ - $X_9$ in Fig. 25;

Fig. 27 shows the cross section of a fuel assembly being another embodiment of the present invention, and is a sectional view taken along $X_{10}$ - $X_{10}$ in Fig. 28;

Fig. 28 is a sectional view taken along $X_{11}$ - $X_{11}$ in Fig. 27;

Fig. 29 shows the cross section of a fuel assembly being another embodiment of the present invention, and is a sectional view taken along $X_{12}$ - $X_{12}$ in Fig. 30;

Fig. 30 is a sectional view taken along $X_{13}$ - $X_{13}$ in Fig. 29; and

Fig. 34 is a cross-sectional view of a fuel assembly which has a fuel rod array of 9 rows x 9 columns and which is furnished with a water rod of cruciform cross section.

Detailed Description of the Preferred Embodiments:

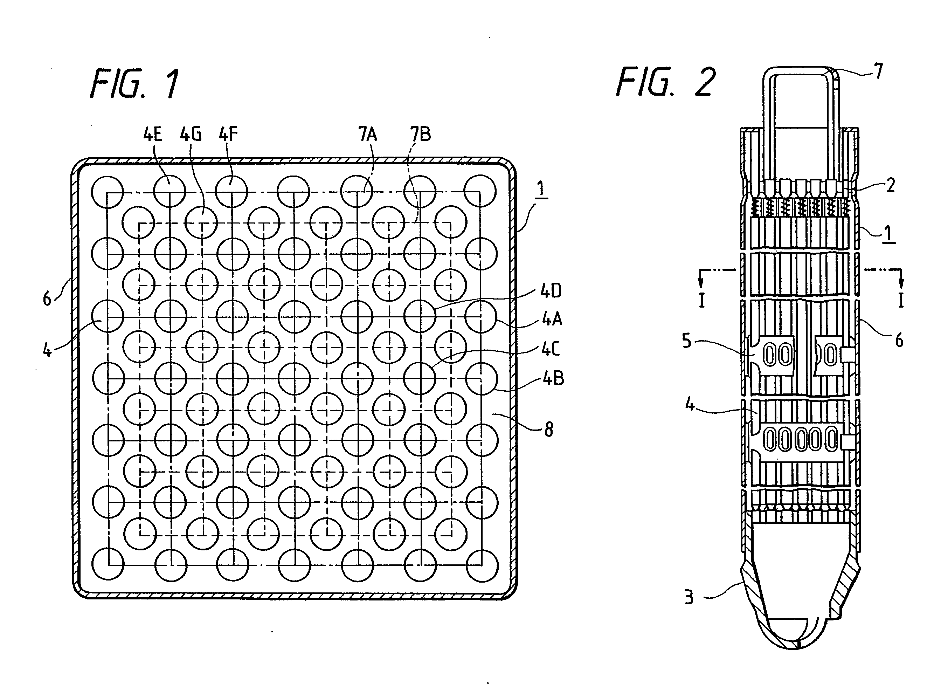

A fuel assembly being one preferred embodiment of the present invention, which is applied to a boiling water reactor, will be described with reference to Figs. 1 and 2.

The fuel assembly 1 of this embodiment has an upper tie plate 2, a lower tie plate 3, fuel rods 4 and fuel spacers 5. The upper tie plate 2 is provided with a handle 7 at its upper part. The plurality of fuel rods 4 have their upper ends supported by the upper tie plate 2, and their lower ends supported by the lower tie plate 3. These fuel rods 4 are inserted through the fuel spacers 5. The plurality of fuel spacers 5 are arranged in the axial direction of the fuel assembly 1, and they hold the fuel rods 4 at predetermined intervals in order to form cooling water channels among these fuel rods. A channel box 6 being a tube which is square in cross section, is attached to the upper tie plate 2 and surrounds a fuel rod bundle formed by the fuel spacers 5. Incidentally, the average enrichment of the fuel assembly 1 is higher than that of the fuel assembly disclosed in Japanese Patent Application Laid-open No. 62-217186.

In the state in which the fuel assembly 1 is inserted in the core of the nuclear reactor, cooling water flows in among the fuel rods 4 through the lower tie plate 3. The cooling water is heated and vaporized by the fuel rods 4, and the vapor flows out of the upper tie plate 2 upwards.

As shown in Fig. 1, the fuel assembly 1 has the array of the fuel rods 4. That is, the fuel assembly 1 has the square lattice array 7A in which the fuel rods 4 are arrayed in the shape of a square lattice of 7 rows x 7 columns indicated by a dot-and-dash line, and the square lattice array 7B in which the fuel rods 4 are arrayed in the shape of a square lattice of 6 rows x 6 columns indicated by a broken line. The pitch of the fuel rods 4 in the square lattice array 7A is equal to the pitch of the fuel rods 4 in the square lattice array 7B. In addition, the square lattice arrays 7A and 7B are arranged in parallel with the side surfaces of the upper tie plate 2 or the lower tie plate 3. It can also be said that these lattice arrays 7A and 7B are parallel to the side surfaces of the channel box 6. The fuel rod 4 of the square lattice array 7B is arranged centrally of a square measure formed by the square lattice array 7A (for example, a measure formed by the fuel rods 4A, 4B, 4C and 4D). In other words, the square lattice 7B is placed in the square lattice array 7A with the pitches of both the arrays shifted by 1/2. Therefore, a square lattice array is formed anew on the basis of a square measure which is smaller than one square measure formed in each of the square lattice arrays 7A and 7B. The new squared lattice array inclines at an angle of $45°$ relative to the side surfaces of the upper tie plate 2 or the lower tie plate 3. The fuel rods 4 of the square lattice array 7A are arranged at the outermost layer of the fuel rod array of this embodiment. Generally speaking, the fuel assembly 1 includes a fuel rod array configured of the combination between a fuel rod array in the shape of a square lattice of n rows x n columns and a fuel rod array in the shape of a square lattice of (n - 1) rows x (n - 1) columns. In the square lattice array 7A, the adjacent fuel rods 4 are in direct opposition to each other. This is also true of the square lattice array 7B.

At the peripheral part of the fuel assembly 1, the fuel rods 4 (for example, the fuel rods 4E and 4F) arranged at the outermost layer of the square lattice array 7A and the fuel rod 4 (for example, the fuel rod 4G) arranged at the outermost layer of the square lattice array 7B are located so as to form a right-angled isosceles triangle. That is, the fuel rods 4E, 4F and 4G are in a right-angled isosceles triangle array. Such a relationship applies to all the fuel rods 4 arranged at the outermost periphery of the fuel assembly 1. Therefore, a cooling water channel or flow passage 8 of large area is formed between the outermost peripheral fuel rods 4, so that a cooling water channel or flow passage area at the peripheral part of the fuel assembly 1 is large relative to a cooling water channel area on the inner side thereof. When the fuel assembly 1 is viewed as a whole, the fuel rods 4 located at the outermost layer of the fuel assembly 1 and the fuel rods 4 located at the adjacent layer inside the outermost layer are arranged so as to form the right-angled isosceles triangles at all the side surface parts of the fuel assembly 1.

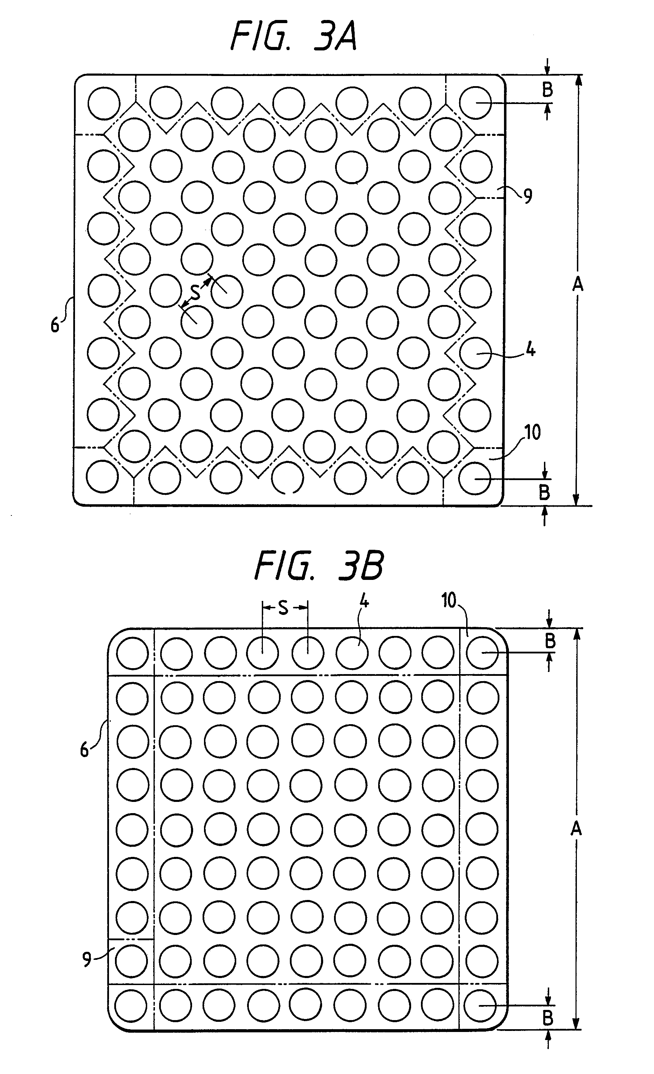

This fact is clarified by comparing the fuel assembly 1 with a fuel assembly in the prior art, for example, the fuel assembly disclosed in the official gazette of Japanese Patent Application Laid-open No. 62-217186. Fig. 3A shows the fuel rod array of the fuel assembly 1, while Fig. 3B shows the (9 rows x 9 columns) fuel rod array of the fuel assembly in the official gazette of Japanese Patent Application Laid-open No. 62-217186. In this embodiment and the prior-art fuel assembly, channel boxes 6 in an identical shape are employed, and the outer diameters of the fuel rods 4 and the spacings S between the adjacent fuel rods are equal. Also, the widths B between the axes of the fuel rods 4 located at the outermost layers and the inner surfaces of the channel boxes 6, as well as the widths A between the opposing inner surfaces of the channel boxes 6 are equal in this embodiment and the prior-art example. The area of the cooling water channel at the peripheral part of the fuel assembly 1, in which the fuel rods 4 are arranged so as to form the right-angled isosceles triangles at the peripheral part as stated before, is about 11% larger than the corresponding area of the fuel assembly of the prior-art example shown in Fig. 3B.

In such a fuel assembly 1 of this embodiment, the ratio of H/U at the peripheral part is greater than in the prior-art example. Accordingly, the effect of moderating neutrons at the peripheral part of the fuel assembly 1 is enhanced, so that the power peaking at the peripheral part of the fuel assembly 1 increases more than in the prior-art example. When note is taken of only the increase of the power peaking, the safety of the fuel assembly 1 is thought to be spoilt. Since, however, the fuel assembly 1 has the thermal margin at the peripheral part increased, it becomes capable of increasing the power peaking at the peripheral part while holding a state of high safety. In particular, since all the fuel rods 4 arranged at the outermost periphery are at the equal spacings, such a function can be demonstrated sufficiently and equally at the respective positions of the peripheral part confronting the four inner surfaces of the channel box 6. The increase of the thermal margin at the peripheral part of this embodiment is based on the following reason: In the fuel assembly 1, the thermal equivalent diameter (= 4 . (cooling water channel area)/(length of the heating surface of the fuel rod 4)) becomes about 26% larger than in the prior-art example in the subchannel 9 of the peripheral part (refer to Fig. 3A) and becomes larger than in the prior-art example in the subchannel 10 of the corner of the fuel assembly (refer to Figs. 3A and 3B). Owing to such increase in the thermal equivalent diameter, the thermal margin of this embodiment increases.

The aforementioned increase of the power peaking at the peripheral part signifies that the neutrons generated in the fuel assembly 1 are effectively utilized for nuclear fission. The fuel economy is therefore enhanced, so that the degree of burnup of the fuel assembly 1 heightens more than the effect of raising the enrichment, and the lifetime of the fuel assembly 1 prolongs.

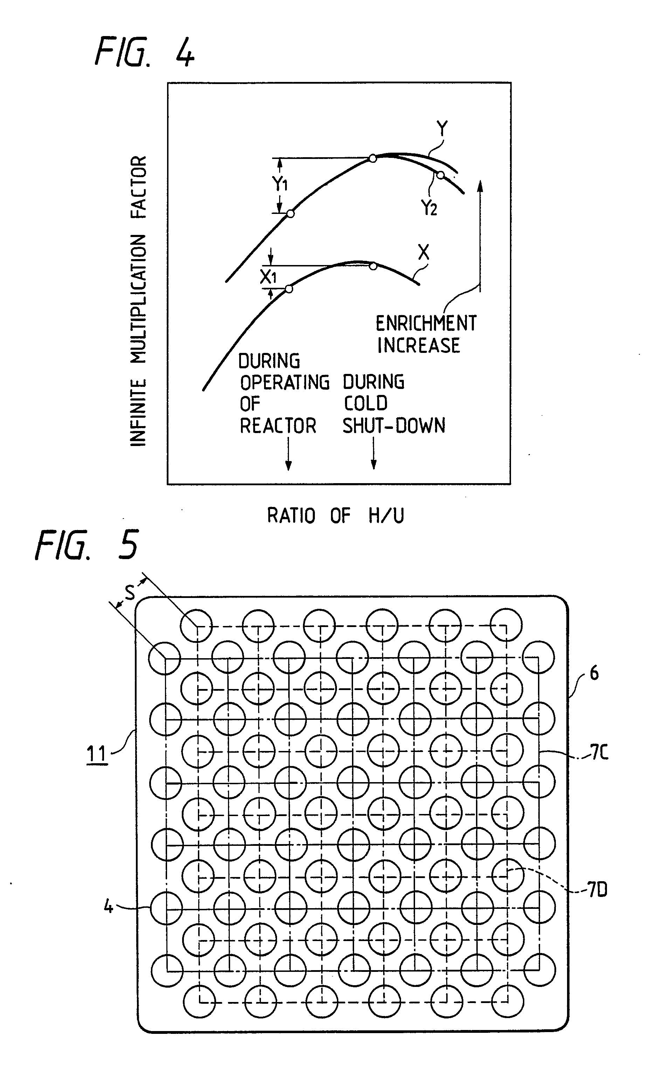

Fig. 4 shows the relationship between the infinite multiplication factor and the ratio of H/U based on the increase of the average enrichment of fuel assemblies in the boiling water reactor. A characteristic X corresponds to the fuel assembly of low average enrichment (in, for example, the structure of the fuel assembly in Fig. 3B), and a characteristic Y the fuel assembly of low average enrichment (in, for example, the structure of the fuel assembly in Fig. 3B). Symbol $X_1$ denotes the difference between the infinite multiplication factors during the operation of the reactor and during the cold shut-down thereof, in the fuel assembly of the characteristic X. On the other hand, symbol $Y_1$ denotes the difference between the infinite multiplication factors during the operation of the reactor and during the cold shut-down thereof, in the fuel assembly of the characteristic Y. In both the characteristics X and Y, the infinite multiplication factor is small during the operation of the reactor during which voids are large in number, and it becomes large during the cold shut-down of the reactor during which the voids are small in number and the neutrons are efficiently moderated. The extend of rise from the infinite multiplication factor during the operation of the reactor, to that during the cold shut-down of the reactor is greater in the fuel assembly of higher average enrichment. This signifies that the fuel assembly of higher enrichment has a narrower shut-down margin.

The fuel assembly 1 of this embodiment has an average enrichment similar to that of the fuel assembly exhibiting the characteristic Y. In the fuel assembly 1, however, the cooling water channel area at the peripheral part is enlarged as stated before, so that the shut-down margin widens. More specifically, the enlargement of the cooling water channel area at the peripheral part leads to increase in the amount of cooling water at the peripheral part of the fuel assembly 1 during the cold shut-down of the reactor. During the cold shut-down of the reactor, therefore, the rate at which the neutrons sufficiently moderated by water gaps defined between the fuel assemblies 1 in the core are absorbed by the cooling water at the peripheral part of the fuel assembly 1 increases to lower the infinite multiplication factor. The difference between the infinite multiplication factors during the operation of the reactor and during the cold shut-down thereof diminishes in case of employing the fuel assembly 1, so that the shut-down margin widens. By the way, the infinite multiplication factor during the cold shut-down of the reactor in the case of employing the fuel assembly 1 becomes the value of a point $Y_2$ (Fig. 4).

Incidentally, it is disclosed in the official gazette of Japanese Patent Application Laid-open No. 58-173491 that the shut-down margin is widened by increasing a cooling water channel area at the peripheral part of a fuel assembly. The fuel assembly disclosed in this official gazette laid open is such that, in the fuel assembly shown in Fig. 3B, the clearance between the outermost fuel rods and the inner surface of the channel box is enlarged. There are two methods for obtaining such a fuel assembly structure. The first method is to set the same pitch of a fuel rod array as in the fuel assembly in Fig. 3(B), and to enlarge the width thereof inside the channel box. The second method is to equalize the size of the channel box to that in the fuel assembly in Fig. 3B, and to make the arrayal pitch of the fuel rods smaller. Problems to be stated below are involved in both the methods. According to the first method, the cross-sectional area of the fuel assembly increases to enlarge the core in the radial direction of the reactor. According to the second method, the pitch of the fuel rod array diminishes, so that the cooling water channel area between the fuel rods decreases. This lowers the effect of cooling the fuel rods except those located at the outermost periphery.

Since the fuel assembly 1 of this embodiment has the fuel rod array as described before, it is free from the problems arising in the fuel assembly in the official gazette of Japanese Patent Application Laid-open No. 58-173491. More specifically, the fuel assembly 1 has the same cross-sectional area as that of the fuel assembly in Fig. 3B, so that the core is not enlarged in the radial direction. Moreover, the spacing S between the adjacent fuel rods of the fuel assembly 1 is equal to that of the fuel assembly in Fig. 3B, and the effect of cooling the fuel rods at the central part does not lower.

Further, as compared with the fuel assembly in Fig. 3B, the fuel assembly 1 of this embodiment can be charged with four more fuel rods 4 without changing the spacing S. In consequence, the fuel assembly 1 can lower the linear power density of the control rod 4.

U. S. P. 4,585,614 consists in that, as stated before, the fuel subassembly which has the fuel rod array of the square lattice and the fuel rod array of the regular triangle lattice is disposed in the fuel assembly, whereby the number of fuel rods in the fuel subassembly is increased by one. The fuel subassembly is one element constituting the fuel assembly. In this regard, since the aforementioned fuel subassembly has the fuel rod arrays of the regular triangle lattice and the square lattice, the whole fuel rod array is complicated. The fuel assembly 1 of this embodiment has the fuel rod array in which the square arrays 7A and 7B are superposed on each other, and even in the superposed state, it has the simple fuel rod array in which the fuel rods are arrayed in the shapes of the square lattices. Moreover, the above fuel subassembly in U. S. P. 4,585,614 has the fuel rod array of the regular triangle lattice located outside the fuel rod array of the square lattice, namely, at the peripheral part of the fuel subassembly. For this reason, the power peaking of the peripheral part of the fuel subassembly lowers. The fuel assembly 1 increases the power peaking of the peripheral part contrariwise to the fuel subassembly.

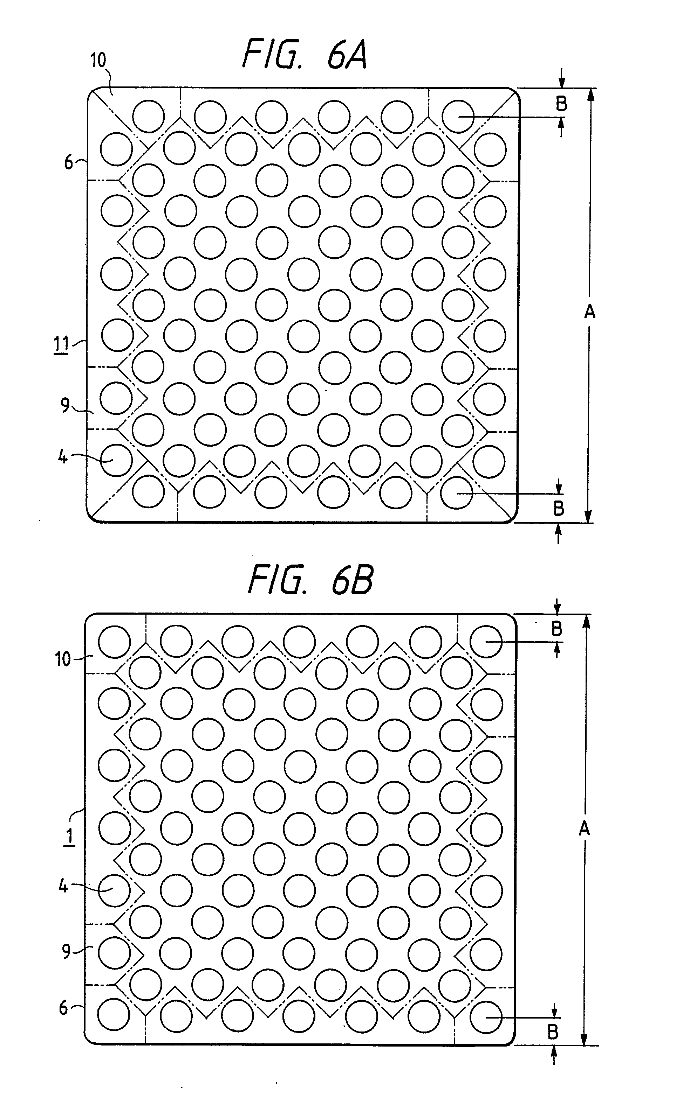

A fuel assembly 11 which is another embodiment of the present invention is shown in Fig. 5. The fuel assembly 11 of this embodiment has the construction depicted in Fig. 2, and it includes a square lattice array 7C in which fuel rods 4 are arrayed in the shape of a square lattice of 7 rows x 6 columns indicated by a dot-and-dash line, as well as a square lattice array 7D in which fuel rods 4 are arrayed in the shape of a square lattice of 7 rows x 6 columns indicated by a broken line. The square lattice array 7D is superposed on the square lattice array 7C in the state in which the former is rotated 90° and has its pitches shifted by 1/2. As in the fuel assembly 1, the fuel rod 4 of the square lattice array 7D is arranged centrally among the four fuel rods 4 which constitute a square measure formed by the square lattice array 7C. The square lattice arrays 7C and 7D are parallel to the side surfaces of an upper tie plate 2 or a lower tie plate 3, and they have equal pitches of the fuel rod arrays. In the state in which the square lattice arrays 7C and 7D are placed one over the other, the spacing S between the adjacent fuel rods is equal to the spacing S between the fuel rods of the fuel assembly 1. The fuel assembly 11 has the fuel rod array which is configured of the combination of the two fuel rod arrays in the shape of the square lattices of n rows x (n - 1) columns.

A cooling water channel or flow passage area at the peripheral part of the fuel assembly 11 enlarges in the same manner as in the fuel assembly 1. With the fuel assembly 11, therefore, the power peaking and the thermal margin at the peripheral part increase, and the shut-down margin increases, as in the case of the fuel assembly 1. Further, likewise to the fuel assembly 1, the fuel assembly 11 can eliminate the problems involved in the fuel assemblies disclosed in U. S. P. 4,585,614 and the official gazette of Japanese Patent Application Laid-open No. 58-173491. Incidentally, the fuel assembly 11 can increase the number of the fuel rods by three when compared with the fuel assembly in Fig. 3B.

For the sake of comparison, Fig. 6A and Fig. 6B show the cooling water channel areas of the peripheral parts of the fuel assemblies 11 and 1, respectively. The outer diameters, the spacings S, and the widths A and B of or concerning the fuel rods are equal in the fuel assemblies 1 and 11. The cooling water channel area of the peripheral part of the fuel assembly 11, namely, the total of the channel area of all the subchannels 9 and 10 becomes about 5.3% larger than that of the peripheral part of the fuel assembly 1. Accordingly, the shut-down margin of the fuel assembly 11 becomes wider than that of the fuel assembly 1. In addition, the thermal equivalent diameter of the fuel assembly 11 increases by 1.7% in the subchannel 9 and by 3.5% in the subchannel 10, relative to that of the fuel assembly 1. Consequently, the thermal margin of the fuel assembly 11 becomes wider than that of the fuel assembly 1.

There will now be described a fuel assembly having an SSR as is another embodiment of the present invention to be applied to a boiling water reactor.

The function of an SSR will be explained before the description of the construction of this embodiment. The function of the SSR is stated in International Application EP-A-0282600, page 9, line 1 - page 12, line 22. The SSR which is expressed as a water rod 1 in the part of the specification of international Application EP-A-0282600, has a coolant raising path and a coolant lowering path connected to the former path. It regulates the amount of voids which accumulate in the coolant raising path and the coolant lowering path, thereby to control the power of a nuclear reactor. The adjustment of the amount of the voids is effected by controlling the flow rate of a coolant in the core of the reactor.

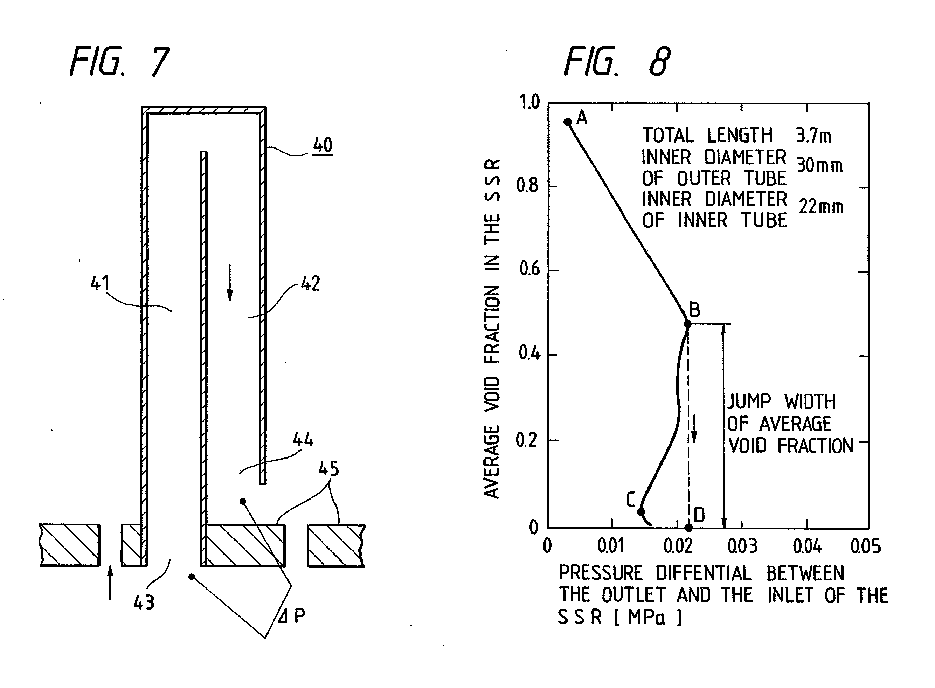

There was estimated variation in the void fraction (the volumetric proportion of vapor) within the SSR, versus the pressure difference between the inlet and outlet of the SSR. An SSR 40 shown in Fig. 7 corresponds to the water rod 1 shown in Fig. 1 of International Application EP-A-0282600. The SSR 40 includes a coolant raising path 41 which has a coolant inlet 43, and a coolant lowering path 42 by which a coolant raised in the coolant raising path 41 is inverted and is guided downwards. The coolant lowering path 42 has a coolant outlet 44 at the lower end therof. The SSR 40 is attached to a resistor 45 (for example, the fuel rod supporting portion of a lower tie plate) within a fuel assembly. The coolant inlet 43 is open below the resistor 45, while the coolant outlet 44 is open above the resistor 45.

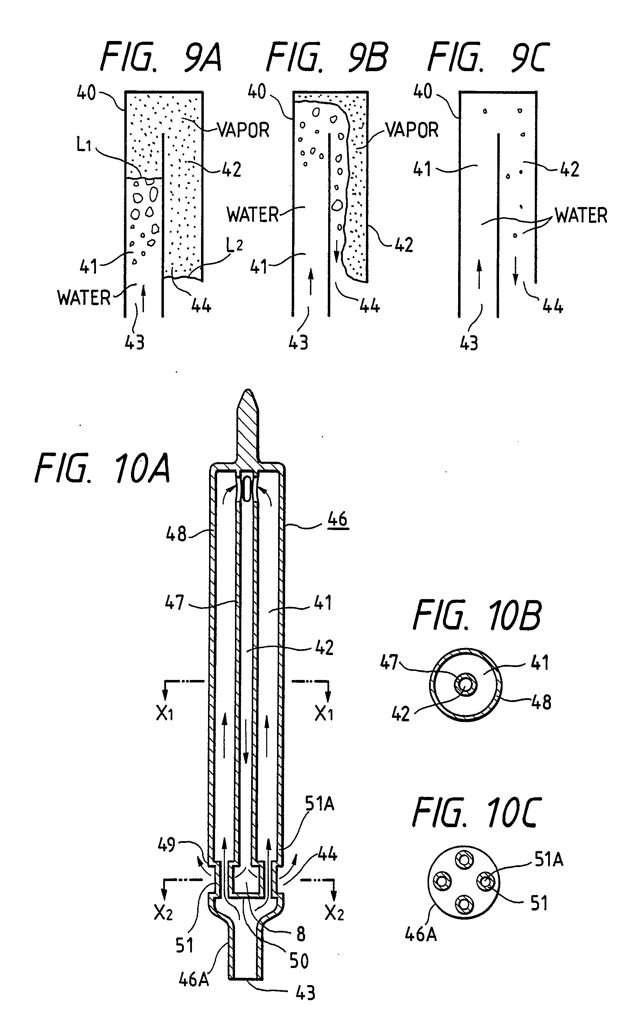

The estimated result of the void fraction variation within the SSR 40, versus the pressure difference between the inlet and outlet of the SSR 40, is illustrated in Fig. 8. The void fraction does not become the monotone function of the pressure difference between the inlet and outlet of the water rod 1, but it becomes the multivalued function thereof. In a case where the pressure difference between the inlet and outlet of the spectral shift rod 40 is increased from a point A, the void fraction decreases monotonously with a certain gradient at first. When a point B (at a void fraction of about 0.45) is reached, the coolant begins to flow unstably, and the void fraction jumps to a point D. That is, the flowing state of the coolant changes abruptly from a state of Fig. 9A to a state of Fig. 9C via a state of Fig. 9B. Such a jump of the void fraction is unpreferable because it incurs a disturbance in the reactivity within the core. It is therefore desirable to employ the SSR 40 of the structure wherein the region from the point A to the point B in which the void fraction decreases monotonously versus the increase of the pressure difference between the inlet and outlet of the SSR 40 is expanded more without the jump of the void fraction. In this SSR, the variation width of the void fraction enlarges more. Accordingly, the relationship between the void fraction and the pressure difference of the outlet and inlet of an SSR was estimated as to the SSR shown in Fig. 10A.

First, the structure of this SSR will be explained with reference to Figs. 10A, 10B and 10C. This SSR 46 has an inner tube 47, and an outer tube 48 surrounding the inner tube 47. It includes a coolant raising path 41 being an annular channel which is formed between the inner tube 47 and the outer tube 48, and a coolant lowering path 42 which is formed inside the inner tube 47. The coolant raising path 41 and the coolant lowering path 42 are held in communication with each other at the upper end parts thereof. The annular channel formed between the inner tube 47 and the outer tube 48 is sealed by a ring plate 49 which is attached to the inner tube 47 and the outer tube 48. The upper end of an engagement portion 46A having a coolant inlet 43 is also sealed by a plate 50. A plurality of inlet tubes 51 which form inlet channels 51A therein, are attached to the ring plate 49 and the plate 50 at the upper end of the engagement portion 46A. The inlet tubes 51 bring the coolant inlet 43 and the coolant raising path 41 into communication. A coolant outlet 44 is formed between the lower end of the outer tube 48 and the upper end of the engagement portion 46A.

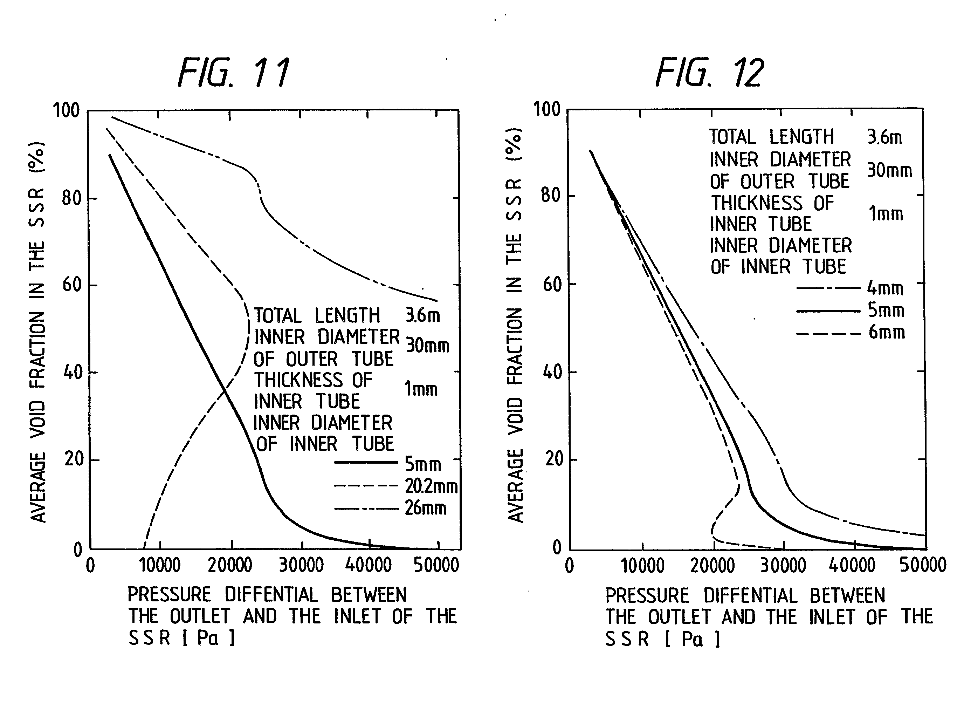

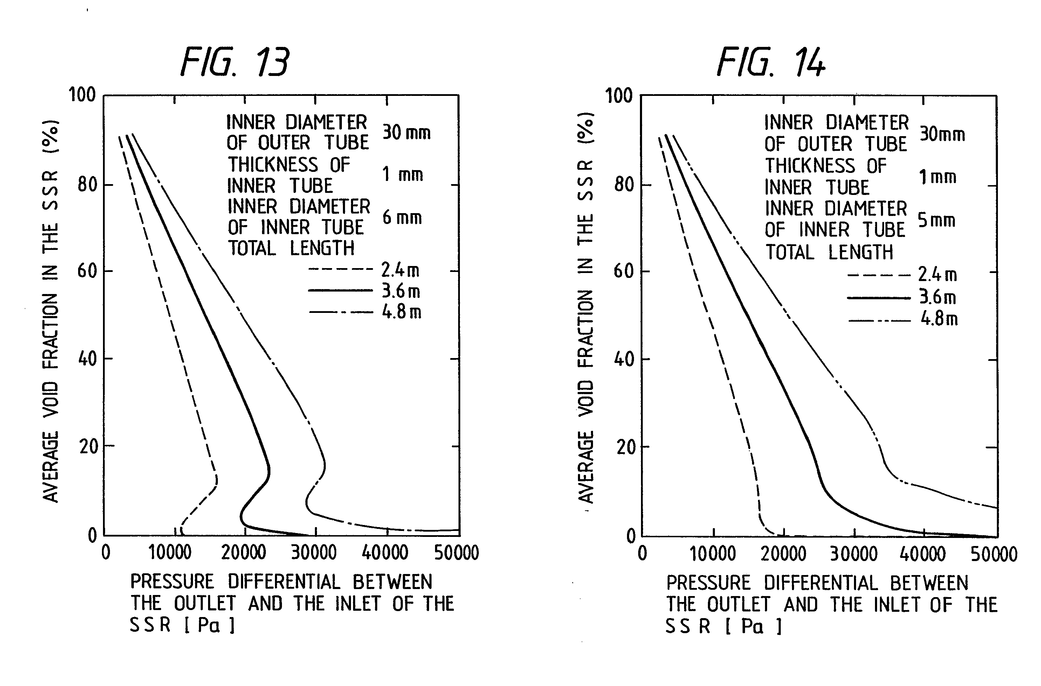

In order to estimate the relationship between the void fraction and the pressure difference of the inlet and outlet of the SSR 46, analyses were made by fixing the inner diameter of the outer tube 48 and using the inner diameter of the inner tube 47 and the total length of the SSR as parameters, in the state in which the SSR 46 was mounted on the lower tie plate 45 instead of the SSR 40 in Fig. 7. The results of the analyses are shown in Figs. 11 - 14. Fig. 11 illustrates the results obtained when the inner diameter of the inner tube was greatly changed as 26 mm, 20.2 mm and 5 mm. It is understood from the figure that, as the inner diameter of the inner tube 47 is smaller, namely, as the cross-sectional area of the coolant lowering path 42 is smaller, the void fraction decreases more versus the increase of the pressure difference between the inlet and outlet of the SSR, this being more effective when the'ssR is utilized for a reactivity control. Besides, when the inner tube 47 has the inner diameter of 20.2 mm (at which the cross-sectional area of the coolant lowering path = that of the coolant raising path), there is a region in which the void fraction becomes a multivalued function with respect to the pressure difference between the inlet and outlet of the SSR. This region is unsuited to the operating region of a nuclear reactor because the void fraction changes abruptly as in the case of Fig. 8. In contrast, when the inner diameter of the inner tube 47 is reduced to 5 mm, the coid fraction changes according to the single-valued function of the pressure difference between the inlet and outlet of the SSR, and hence, the SSR can be used for the reactivity control. Meanwhile, a parameter survey in which the inner diameter of the inner tube was variously changed was further conducted in order to find a condition under which the multivalued function changes to the single-valued function. The results of the survey are illustrated in Fig. 12. The relationship between the void fraction and the pressure difference between the inlet and outlet of the SSR becomes a single-valued function when the inner diameter of the inner tube 47 is 4 mm or 5 mm, whereas it becomes a multivalued function when the inner diameter of the inner tube 47 is set at 6 mm. It has accordingly been revealed that the boundary of the single-valued function and the multivalued function exists between 5 mm and 6 mm in terms of the inner diameter of the inner tube 47. In addition, studies were made on the inner tubes whose inner diameters were less than 5 mm, and it has been revealed that any region of multivalued function does not exist. Besides, the inner tubes whose inner diameters were 5 mm and 6 mm were analyzed using the total length of the SSR as a parameter. The results of the analyses are illustrated in Figs. 13 and 14. It is seen from both the figures that the condition of the transition between the single-valued function and the multivalued function does not considerably depend upon the total length of the SSR. Therefore, the condition of the transition between the single-valued function and the multivalued function can be expressed as follows, in terms of the cross-sectional area of the coolant raising path and that of the coolant lowering path:

(Cross-sectional area of Coolant raising path)/(Cross-sectional area of Coolant lowering path) > 25    (1)

When this condition is satisfied, the phenomenon of the jump of the void fraction as stated before can be eliminated, and the proportion of water (or vapor) can be changed continuously in the whole flow rate range within the SSR.

The region from the point A to the point B in Fig. 8, in which the void fraction decreases monotonously versus the increase of the pressure difference between the inlet and outlet of the SSR, is expanded by making the cross-sectional area of the coolant raising path larger than that of the coolant lowering path. The state in which the cross-sectional areas of the coolant raising path and the coolant lowering path meet the relationship of Inequality (1), is the most desirable state.

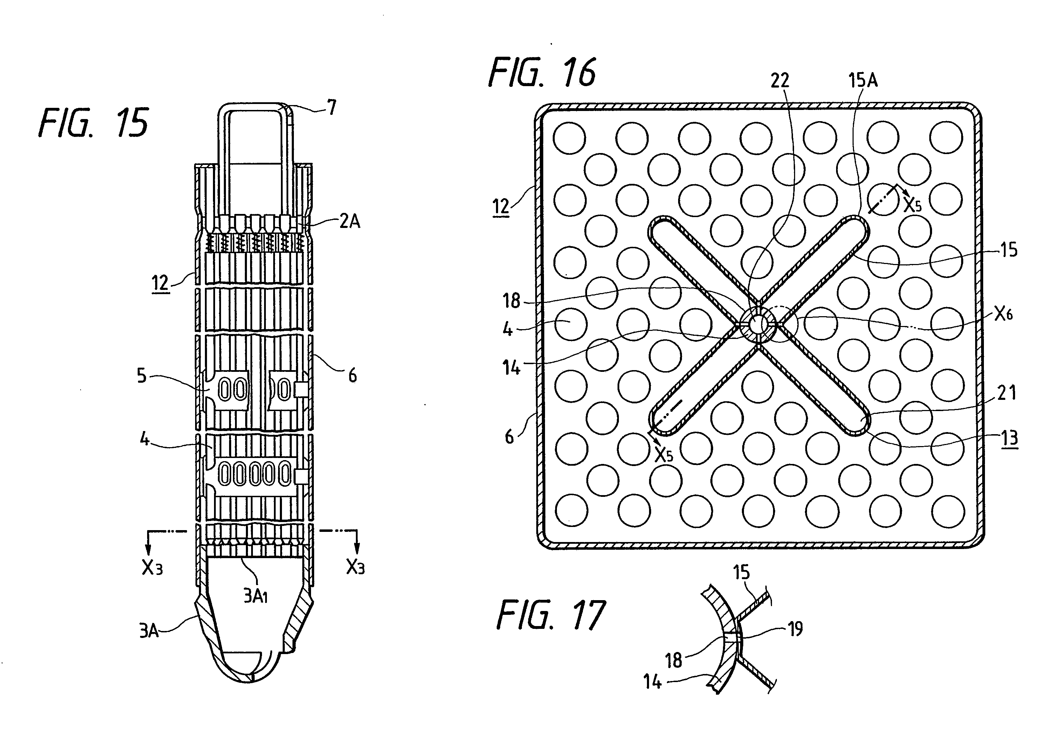

The fuel assembly of this embodiment having the SSR in which the above results of the studies are reflected, will be described below with reference to Figs. 15 - 19.

Likewise to the fuel assembly 1, the fuel assembly 12 of this embodiment has an upper tie plate 2A, a lower tie plate 3A, fuel rods 4 and fuel spacers 5. The lower end parts of the plurality of fuel rods 4 are supported by the fuel rod supporting portion $3A_1$ of the lower tie plate 3A. Incidentally, the average enrichment of the fuel assembly 12 is higher than that of the fuel assembly in Japanese Patent Application Laid-open No. 62-217186.

The fuel assembly 12 has the fuel rods 4 arranged in the state in which the square lattice arrays 7A and 7B are superposed on each other as in the fuel assembly 1. Further, unlike the fuel assembly 1, the fuel assembly 12 has the SSR 13 at the central part of the cross section thereof, this SSR exhibiting a cruciform cross section as shown in Fig. 16. The axis of the SSR 13 agrees with that of the fuel assembly 12. The structure of the SSR 13 will be described with reference to Figs. 16 - 18. The SSR 13 comprises a hollow tube 14 which is centrally disposed, and blades 15 which are mounted on the hollow tube 14 and the cross-sectional shape of which is cruciform. The upper ends and lower ends of the blades 15 are sealed. The upper end of the hollow tube 14 lies below the position K of the internal uppermost ends of the blades 15. A partition plate 16 is mounted on the internal lower end part of the hollow tube 14. A plurality of openings 17 are provided in those parts of the side wall of the hollow tube 14 which are below the partition plate 16. A cooling water outlet 18 is provided so as to penetrate the hollow tube 14 and the blades 15 at the positions at which the blades 15 are mounted on the hollow tube 14. The hollow tube 14 and the blades 15 are welded in the circumferential direction of the cooling water outlet 18 from inside this cooling water outlet 18. A part 19 indicated in Fig. 17 is the welded part. The blades 15 have a support portion 20 at the upper end parts thereof. The SSR 13 has the lower end part of the hollow tube 14 supported by the lower tie plate 3A, and has the support portion 20 supported by the upper tie plate 2A. In the state in which the SSR 13 is set in the fuel assembly 12, the axis of the hollow tube 14 agrees with that of the fuel assembly 12, and the four side ends 15A of the blades 15 are directed toward the corners of the fuel assembly 12. As viewed in cross section, the SSR 13 occupies a region having an area in which thirteen fuel rods 4 can be arranged. That is, due to the arrangement of the SSR 13, the fuel assembly 12 is smaller in the number of fuel rods 4 than the fuel assembly 1 by thirteen.

Such an SSR 13 forms a coolant water raising path 21 inside the blades 15, and a cooling water lowering path 22 inside the hollow tube 14. The lower end of the hollow tube 14 protrudes downwards beyond the lower tie plate 3A. A cooling water inlet 23 is provided at the lower end of the hollow tube 14. The cooling water outlet 18 is located near the lower end of the effective fuel length portion (a region in which fuel pellets are packed) of each fuel rod 4. The cross-sectional areas of the cooling water raising path 21 and cooling water lowering path 22 of the SSR 13 satisfy the relationship of Inequality (1).

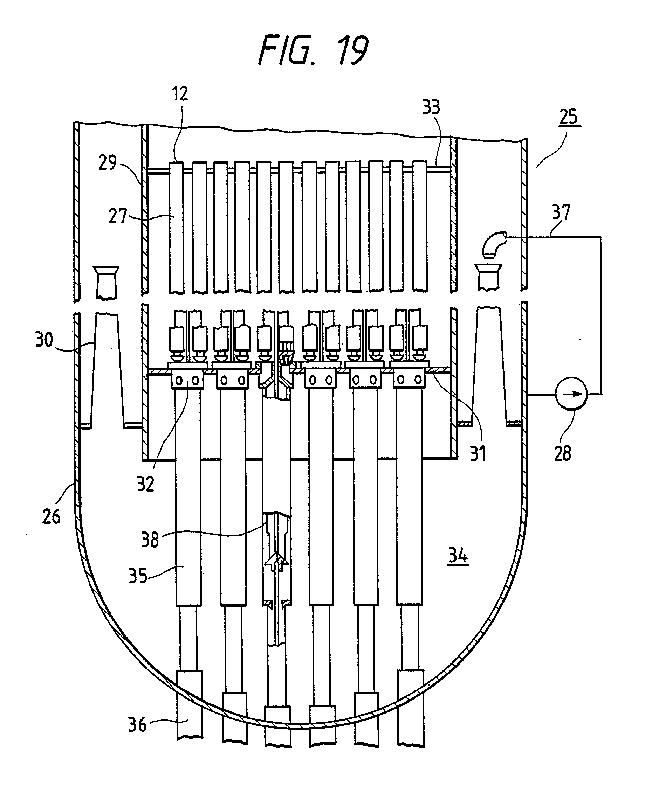

The structure of a boiling water reactor having a core which is loaded with the fuel assemblies 12, will be described with reference to Fig. 19.

The boiling water reactor 25 has a reactor pressure vessel 26, the core 27 loaded with the fuel assemblies 12, and a recirculation pump 28. A core shroud 29 fixed to the reactor core vessel 26 is arranged in this reactor core vessel 26. A jet pump 30 is located between the reactor pressure vessel 26 and the core shroud 29. A core lower-part supporting plate 31 is arranged inside the core shroud 29, and is fixed to this core shroud 29. A plurality of fuel fittings 32 are attached to the core lower-part supporting plate 31 while penetrating it. An upper lattice plate 33 is fixed to the core shroud 29. A large number of control rod guide tubes 35 are installed in a lower plenum chamber 34 which is below the core lower-part supporting plate 31. Control rod driver housings 36 are mounted on the bottom of the reactor pressure vessel 26. Recirculation piping 37 which is led to the region between the reactor pressure vessel 26 and the core shroud 29, is open to the upper end of the jet pump 30. The recirculation pump 28 is inserted in the recirculation system piping 37. Control rods 38 are arranged in the control rod guide tubes 35, and they are coupled to control rod drivers (not shown) installed in the control rod driver housings 36. The fuel assemblies 12 are held with the lower tie plates 3A inserted in the fuel fittings 32, and they have their upper end parts held by the upper lattice plate 33. When the control rod drivers are actuated, the control rods 38 are inserted among the fuel assemblies 12 while penetrating the fuel fittings 32.

The supply of the coolant to the core is carried out as follows: By driving the recirculation pump 28, the cooling water in the region between the reactor pressure vessel 26 and the core shroud 29 is spurted into the jet pump 30 through the recirculation system piping 37. Thus, the cooling water in the region between the reactor pressure vessel 26 and the core shroud 29 is further drawn into the jet pump 30 by suction. The cooling water discharged from the jet pump 30 flows into the lower plenum chamber 34, whereupon it is passed through the interiors of the fuel fittings 32 and is supplied into the fuel assemblies 12 through the lower tie plates 3A. The recirculation pump 28 is means for regulating the flow rate of the cooling water in the core.

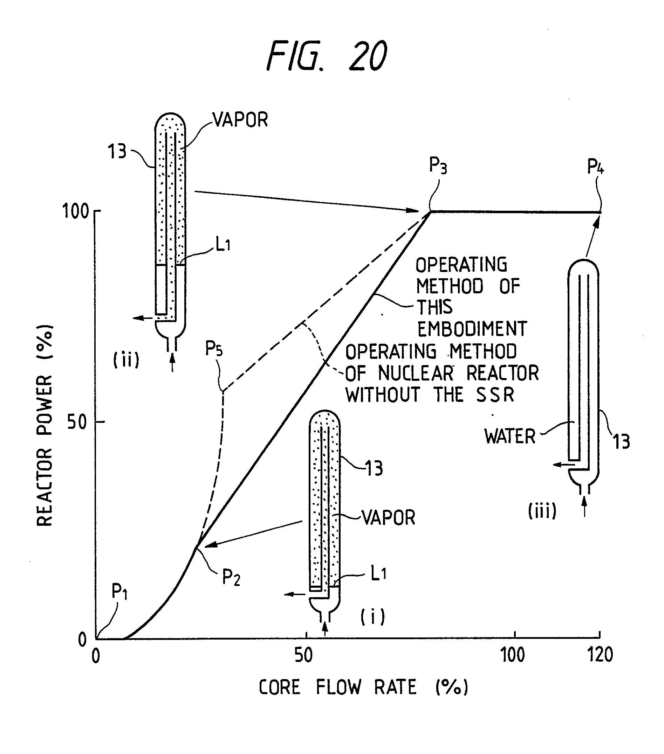

The boiling water reactor 25 whose core 27 is loaded with the fuel assemblies 12, can have the power thereof controlled by operations as described below. When the nuclear reactor is to be started in one fuel cycle period (a period from the start of the nuclear reactor after the end of the operation of loading the core with fuel, till the shutdown of the reactor for the next fuel exchange), the reactor power is raised from a point $P_1$ to a point $P_2$ as indicated in Fig. 20. On this occasion, while the flow rate of the cooling water to be supplied into the core (the core flow rate) is kept at 20% by adjusting the revolutions-per-minute of the recirculation pump 28, all the control rods 38 are entirely withdrawn by the control rod drivers, thereby to raise the reactor power as stated above. That is, at the point $P_2$, all the control rods 38 are entirely withdrawn from the core 27. In a boiling water reactor loaded with fuel assemblies each of which has no SSR (termed the "reactor without the SSR"), the power of the reactor is raised from the point $P_1$ to a point $P_5$ at the start thereof. At the point $P_5$, some of the control rods are inserted in the core. As the reactor power rises, vapor accumulates in each SSR 13, and the state of the interior of the SSR 13 at the point $P_2$ becomes as shown at (i) in the lower central part of Fig. 20. More specifically, the vapor accumulates in most parts of the coolant raising path 21 and coolant lowering path 22 of the SSR 13, and a liquid level $L_1$ is formed at a predetermined level in the lower part of the coolant raising path 21 of the SSR 13. The liquid level $L_1$ appears on the basis of heating owing to radiation (gamma ray) which is generated by the withdrawal of the control rods 38. Under this state under which all the control rods 38 are entirely withdrawn, the control rods 38 are not driven, and the core flow rate is gradually increased. Then, the liquid level $L_1$ in the coolant raising path 21 rises gradually, to conspicuously decrease the average void fraction of the core. In consequence, the reactor power rises from the point $P_2$ to the rated power (100% power) of a point $P_3$ which is a preset target reactor power. The reactor power is raised at a predetermined rise rate in order to avoid fuel failure. The state of the interior of the SSR 13 at the point $P_3$ becomes as shown at (ii) in the upper left part of Fig. 20. On this occasion, a liquid level $L_1$ formed in the coolant raising path 21 becomes higher than the liquid level $L_1$ at the point $P_2$. The nuclear reactor is operated since the point $P_3$ till the end of the fuel cycle while holding the rated power (for example, the reactor power of 100%). Herein, a nuclear fuel material is consumed by burnup to lower the reactivity as stated before. The lowering of the reactivity is compensated in such a way that the liquid level $L_1$ in the SSR 13 is raised by the increase of the core flow rate, thereby to lower the void fraction. In the operating method for the reactor without the SSR, the change of the void fraction based on the core flow rate is slight, and hence, the lowering of the reactivity is compensated by employing the withdrawal operation of the control rods conjointly, as disclosed in U.S.P. 4,279,698. In this embodiment, the void fraction in the SSR 13 can be changed much by raising the liquid level $L_1$ of the cooling water in the SSR 13. Therefore, the operation of withdrawing the control rods need not be performed, and the reactor power can be held constant from the point $P_3$ till a point $P_4$ by adjusting the liquid level $L_1$ of the cooling water in the SSR 13. At the point $P_4$, the SSR 13 is filled up with the water as shown by a state (iii) in the right side part of Fig. 20. When the nuclear reactor is to be shut down near the end of the fuel cycle period, the control rods 38 are inserted to shut down the operation of the reactor. As the liquid level $L_1$ in the coolant raising path 21 rises, the SSR 13 increases the function of the water rod. In the state (iii) in Fig. 20, the SSR 13 is filled up with the cooling water (subcooled water) and functions as the water rod perfectly. As stated in the specification of U.S.P. 4,279,698, column 7, line 45 - column 9, line 2 and column 9, line 22 - line 24, and illustrated in Figs. 7 and 8 of the drawings of the patent, the reactor without the SSR is started in such a way that a xenon storing operation based on a core flow rate control of K-L-M-K and a control rod withdrawing operation utilizing the xenon storage are performed a predetermined number of times, whereupon the power of the reactor is increased to the rated power of 100%. Since this embodiment can adjust the variation width of the core void fraction greatly owing to the use of the SSR 13, it need not perform the complicated reactor power control as in the prior-art example. Thus, in this embodiment in which the reactor power is raised up to the point $P_2$ by the control rod withdrawal and is further raised up to

the point $P_3$ by the adjustment of the liquid level $L_1$ in the SSR 13 as based on the core flow rate control, the period of time required for raising the reactor power to the point $P_3$ can be made much shorter than in the prior-art example. Besides, the power control operation in the mode of starting the nucelar reactor becomes remarkably simpler than in the prior-art example. Further, since the control rod 38 are entirely withdrawn from the core 27 at the initial stage of the reactor starting mode, the period of use of the control rods 38 is shortened, and the consumption of the control rods 38 lessens. This leads to decrease in the number of times for exchanging the control rods.

The aforementioned operation of compensating the lowering of the reactivity attendant upon the consumption of the nuclear fuel material since the point $P_3$ in this embodiment is remarkably simplified because the operation of changing the pattern of the control rods as stated in U.S.P. 4,279,698, column 10, line 8 - column 11, line 3 need not be carried out.

Incidentally, the liquid level $L_1$ in the SSR 13 as corresponds to the point $P_2$ in Fig. 20 is determined in such a way that the pressure loss between the inlet and outlet of the SSR 13 (particularly the pressure loss of the lower tie plate 3A) is set relative to the conditions of the reactor power and core flow rate at the point $P_2$. At this point $P_2$, the predetermined volume of the vapor region can be secured in the SSR 13, so that the subsequent control of the reactor power rise can be performed easily and safely.

In this embodiment, when the reactor flow rate is low (when the pressure difference between the inlet and outlet is small), the void fraction in the SSR 13 can be enlarged up to about 70%. Therefore, the average void fraction of the core can also be sufficiently increased, and the reactivity can be readily lowered to a predetermined level. Besides, the reactivity lowers with the burnup of the fuel. However, also the void fraction in the SSR 13 lowers in such a way that the liquid level $L_1$, in the SSR 13 is adjusted by gradually increasing the core flow rate. Thus, the average void fraction of the core lowers, so that the function of moderating neutrons can be recovered to compensate the lowering of the reactivity. Moreover, since the variation width of the void fraction is large in this case, the whole reactivity region can be controlled with the SSR 13 only. In other words, the control of an excess reactivity is permitted by the adjustment of the liquid level $L_1$ in the SSR 13. As a result, the control rods 38 may be operated only in the modes of shutting down and starting the nuclear reactor. This leads to remarkably lowering the frequence of use of the control rods 38, namely, remarkably shortening the period of time for which the control rods 38 are inserted in the core 27 during the reactor operation, and also to prolonging the exchange cycle of the control rods 38. The number of spent control rods 38 to be disposed of as a waste decreases conspicuously. Further, the SSR 13 has the cross-sectional area occupying the region in which the thirteen fuel rods can be arranged, so that all the control rods can be entirely withdrawn from the core 27 during the fuel cycle period except the initial stage thereof. As a result, the controllability of the reactor operation is remarkably enhanced, and the structure of the control rods can be simplified, so that a reactor system of high reliability is provided.

Further, according to this embodiment, in a case where the recirculation pump 28 has stopped due to a transient fault such as the service interruption of power supply, the interior of the SSR 13 is shifted into a high void fraction state by the lowering of the core flow rate. In consequence, the function of moderating neutrons is drastically weakened to lower the reactivity. This prevents the stop of the recirculation pump 28 from growing into a major accident. Besides, in this embodiment, it is possible to perform the spectral shift operation that fissionable fuel (plutonium-239) can be produced by utilizing neutrons which become excessive at the initial stage of the fuel cycle. This also greatly effective. Especially in the region of the reactor power above the point $P_2$, the degree of insertion of the control rods into the core 27 is very low (null in this embodiment), so that some of neutrons absorbed by the control rods in the prior-art example are absorbed by uranium-238 in the fuel rod 4, while the remainder is utilized for the fission of uranium-235. In this manner, the embodiment enlarges the utilization factor of the neutrons. Increase in the amount of the neutrons absorbed by the uranium-238 leads to increase in the ratio of conversion of the uranium-238 into the plutonium-239. Especially in the case where the vapor region is large in the SSR 13, the proportion of fast neutrons is large, and hence, the amount of the neutron absorption by the uranium-238 increases. This is greatly contributive to the production of the new fissionable material (plutonium-239).

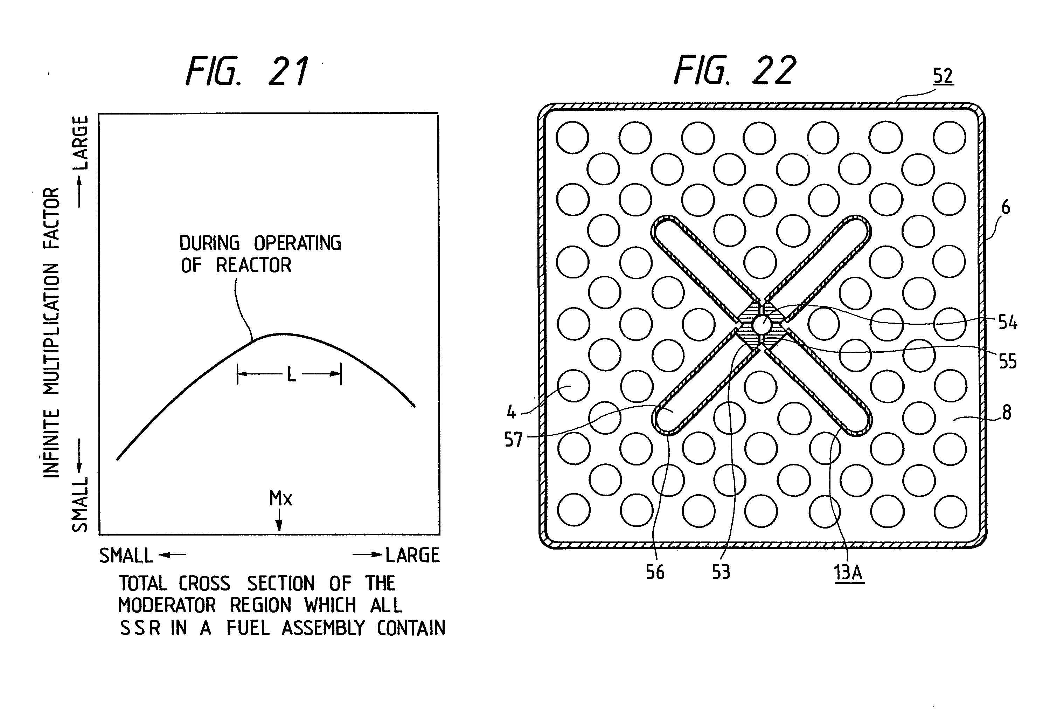

Moreover, the fuel assembly 12 can achieve all of the effects attained by the fuel assembly 1, namely, the increase of the power peaking at the peripheral part of the fuel assembly 12, the increases of the thermal margin and the shut-down margin at the same, and the elimination of the problems involved in the respective fuel assemblies disclosed in U.S.P. 4,585,614 and Japanese Patent Application Laid-Open No. 58-173491 mentioned before. Furthermore, in this embodiment, the fuel rod array is configured of the combination of the square lattice arrays 7A and 7B as in the fuel assembly 1, and hence, the cross-sectional area of the SSR 13 can be enlarged. That is, the number of the fuel rods to increase can be allotted to increase in the cross-sectional area of the SSR 13. Therefore, notwithstanding that the average enrichment is heightened, the ratio of H/U can be approached to the optimum value indicated in Fig. 21, and hence, the fuel economy of the fuel assembly 12 is enhanced. The increase of the cross-sectional area of the SSR 13 leads to the enlargement of the variation width of the void fraction, owing to which the effect of the spectral shift can be increased. Especially in this embodiment, the number of the fuel rods 4 to adjoin the SSR 13 enlarges, so that the burnup of uranium can be promoted by efficiently utilizing the flattening of a neutron flux distribution. The increase of the cross-sectional area of the SSR 13 is also permitted by the fact that the side ends of the blades 15 of the SSR 13 are located facing the corners of the channel box 6.

Since the hollow tube 14 of the SSR 13 is in contact with the blades 15 lying in contact with the cooling water, the following effect is brought forth: Even in the state in which the vapor accomulates in the hollow tube 14, the heat of the hollow tube 14 is transmitted to the outer cooling water through the parts thereof lying in contact with the blades 15. Consequently, the temperature of the hollow tube 14 of the SSR 13 becomes lower than that of the inner tube 47 of the SSR 46 (Fig. 10A).

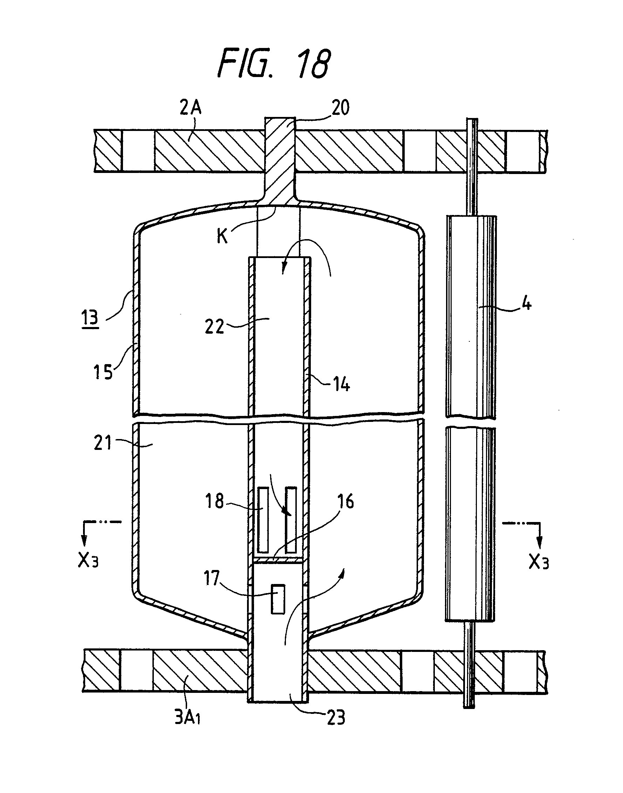

A fuel assembly 52 which is another embodiment of the present invention, is shown in Fig. 22. The fuel assembly 52 is such that the SSR 13 of the fuel assembly 12 is replaced with an SSR 13A. The SSR 13A is so constructed that four blades 56 each having a U-shaped cross section are mounted on the side surface of a central member 53 which is a bar having a cruciform cross section. The central member 53 includes therein a cooling water lowering path 54 which extends along the axis of this member. A cooling water raising path 57 is formed in each of the blades 56. The blades 56 extend in four directions from the central member 53. Likewise to the SSR 13 (Fig. 18), the SSR 13A has the lower ends of the blades 56 sealed and also has the upper ends of the blades 56 sealed in the state in which the cooling water raising paths 57 in the respective blades 56 can be communicated to one another. The cooling water lowering path 54 and the cooling water raising paths 57 are communicated at the upper end parts thereof as in the SSR 13. The lower end part of the central member 53 is supported by the lower tie plate 3A of the fuel assembly 52. The lower end part of the central member 53 has the same structure as that of the hollow tube 14 of the SSR 13 (Fig. 18). Cooling water outlets 55 for bringing the lower end part of the cooling water lowering path 54 into communication with a region outside the SSR 13A are provided at the same positions as in the SSR 13. The relationship between the cross-sectional areas of the cooling water lowering path 54 and the cooling water raising paths 57 in the SSR 13A satisfies the condition of Inequality (1).

The fuel assembly 52 of this embodiment has effects similar to those of the foregoing fuel assembly 12. In this embodiment, parts of the side surfaces of the central member 53 of the SSR 13A are in direct touch with cooling water which flows outside the SSR 13A. Thus, as compared with the SSR 13, the SSR 13A enhances the cooling efficiency of the member which defines the cooling water lowering path. Since, however, the SSR 13A increases the thickness of the member defining the cooling water lowering path, it becomes lower in the neutron economy than the SSR 13.

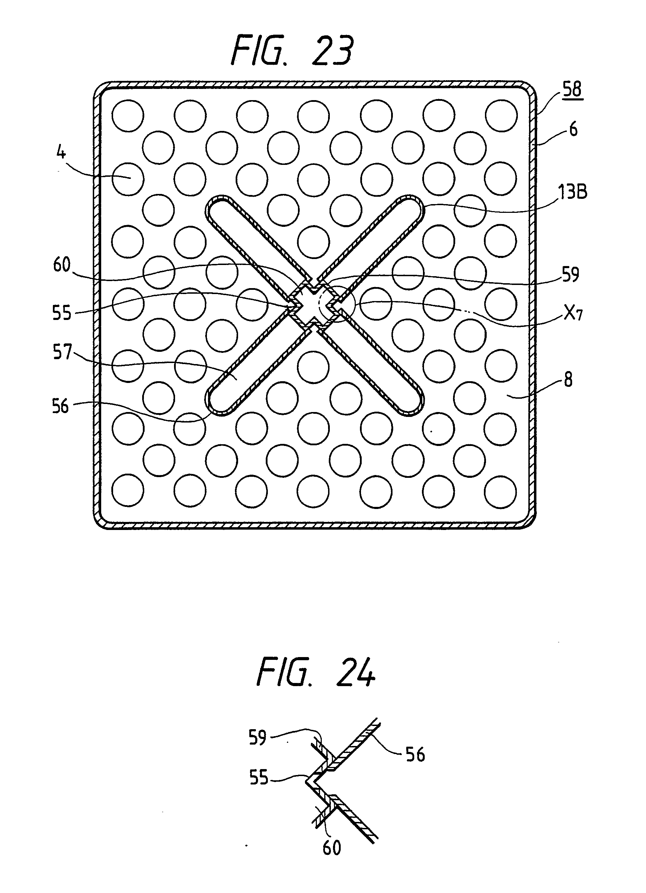

A fuel assembly 58 shown in Fig. 23, which is another embodiment of the present invention, includes an SSR 13B. The structure of the fuel assembly 58 except the SSR 13B is the same as in the fuel assembly 52. The SSR 13B is such that the central member 53 of the SSR 13A is replaced with a central member 59. As compared with the central member 53, the central member 59 has the thickness of the side walls thereof reduced. In consequence, the cross-sectional area of a cooling water lowering path 60 can be enlarged. With the SSR 13B, the ratio between the cross-sectional area of the cooling water raising paths 57 and that of the cooling water lowering path 60 does not fulfill the condition of Inequality (1) and becomes somewhat smaller than 25. The fuel assembly 58 having the SSR 13B, however, can remarkably enlarge the region in which the inlet/outlet pressure difference and void fraction of the SSR are proportional (the region from the point A to the point B in Fig. 8), when compared with a fuel assembly employing an SSR wherein the cross-sectional area of cooling water raising paths is equal to that of a cooling water lowering path. This signifies that the use of the fuel assembly 58 lessens the proportion of the control rod operation for the reactor power control or prolongs the lifetime of the control rods. This effect becomes lower than in the case of employing the SSR which satisfies the condition of Inequality (1) (for example, the SSR 13). As compared with the SSR 13A, the SSR 13B decreases in the amount of neutrons to be absorbed thereby, in correspondence with the reduced thickness of the central member. Except for these points, effects which are attained by the fuel assembly 58 are the same as those of the fuel assembly 52.

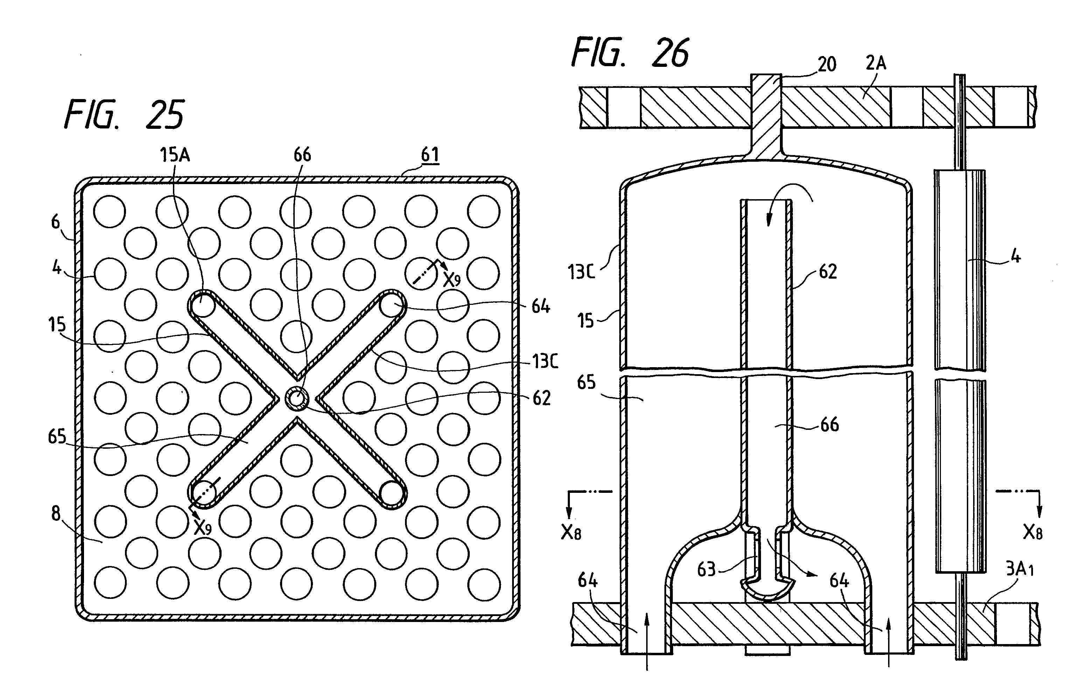

A fuel assembly which is another embodiment of the present invention, is shown in Figs. 25 and 26. The fuel assembly 61 of this embodiment is identical in structure to the fuel assembly 12 except that an SSR is structurally different from the SSR 13 of the fuel assembly 12. The SSR 13C for use in this embodiment has a hollow tube 62 installed inside blades 15 and at the axial position thereof. The hollow tube 62 has its lower end part protruded below the blades 15 and has its lower end sealed. Cooling water outlets 63 are provided in the side wall of that part of the hollow tube 62 which is protruded below the blades 15. The cooling water outlet 63 lies at the same position as that of the cooling water outlet 18 of the SSR 13. The four side end parts 15A of the blades 15 are extended downwards, and are supported by the lower tie plate 3A. The lower ends of these side end parts 15A form cooling water inlets 64. Cooling water raising paths 65 continuous to the cooling water inlets 64, and a cooling water lowering path 66 continuous to the cooling water outlets 63 are held in communication at the upper end parts of the blades 15. The cooling water raising paths 65 are defined between the blades 15 and the hollow tube 62, while the cooling water lowering path 66 is defined inside the hollow tube 62. The SSR 13C satisfies the condition of Inequality (1).

The fuel assembly 61 of this embodiment produces the same effects as those of the fuel assembly 12. The structure of the SSR 13C becomes complicated in comparison with that of the SSR 13.

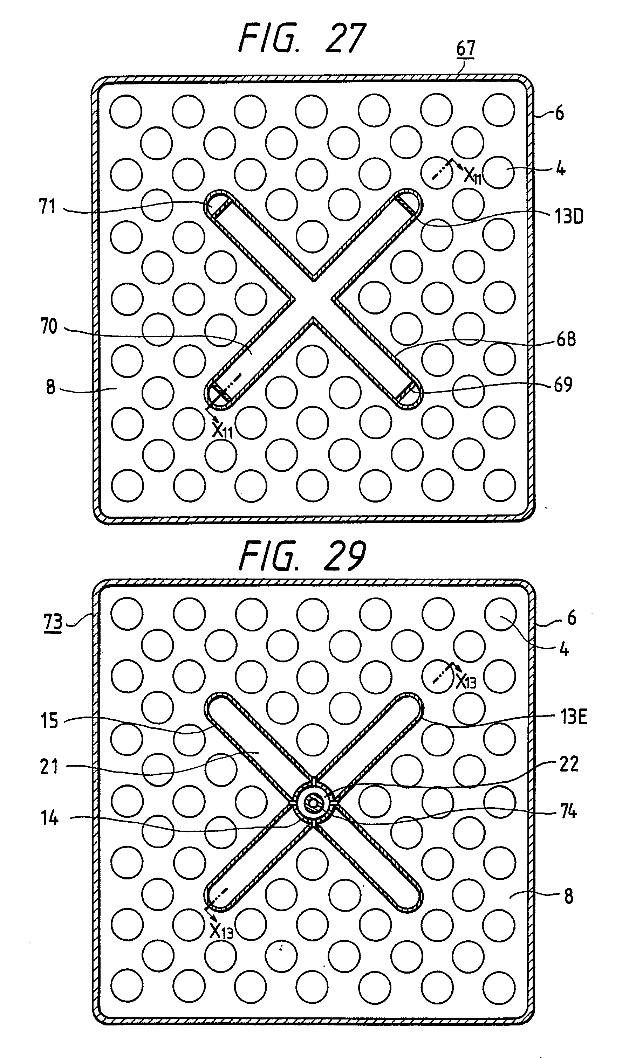

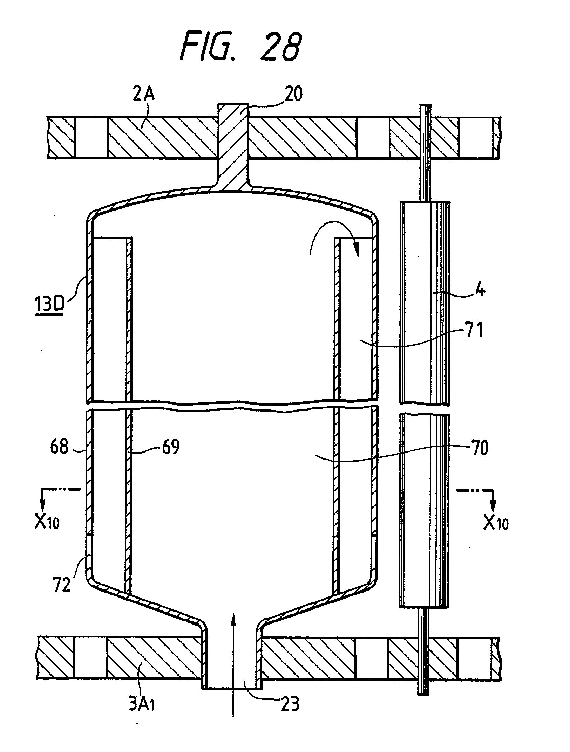

A fuel assembly 67 which is another embodiment of the present invention, will be described with reference to Figs. 27 and 28. The fuel assembly 67 includes an SSR 13D, and the other structure is the same as in the fuel assembly 12. The SSR 13D is so constructed that, inside tubular blades 68 which exhibit a cruciform cross section, the four side end parts thereof are provided with partition plates 69 which separate a cooling water raising path 70 from cooling water lowering paths 71. The cooling water raising path 70 and the cooling water lowering paths 71 are held in communication at the upper end parts of the blades 68 as in the SSR stated before. Numeral 72 indicates a cooling water outlet which is held in communication with the cooling water lowering path 71. The SSR 13D satisfies the condition of Inequality (1).

Also this embodiment produces the same effects as those of the fuel assembly 12. Since however, this embodiment needs to attach the partition plates 69 to the four side end parts of the blades 68, it is troublesome in fabrication as compared with the fuel assembly 12 having the SSR 13.

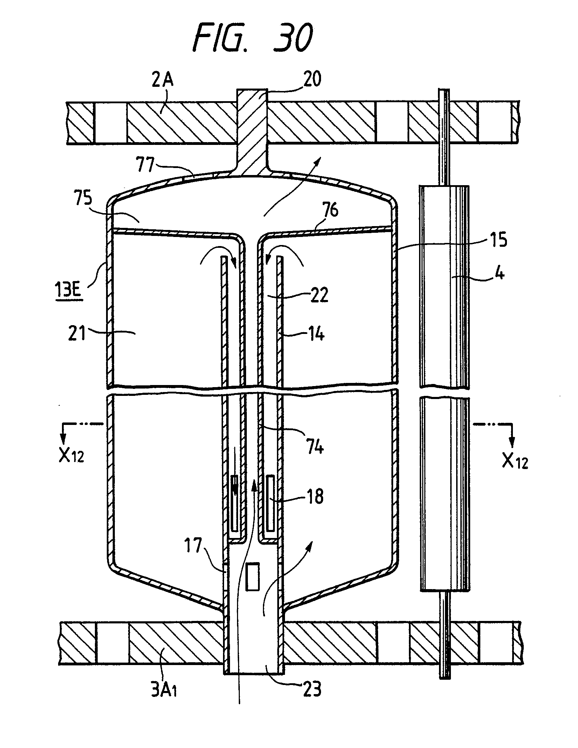

Figs. 29 and 30 show a fuel assembly which is another embodiment of the present invention. The fuel assembly 73 of this embodiment is structurally identical to the fuel assembly 12 except that an SSR 13E is employed. The SSR 13E is such that a hollow tube 74 is disposed inside the hollow tube 14 of the SSR 13, and that a cooling water reservoir 75 is formed at the upper end parts of blades 15. A cooling water lowering path 22 is defined between the hollow tube 14 and the hollow tube 74. The lower end of the cooling water lowering path 22 is sealed by an annular member which mounts the lower end of the hollow tube 74 on the hollow tube 14. The cooling water reservoir 75 is formed above a partition member 76 which is provided inside the blades 15 and above the upper end of the hollow tube 14. The upper end of the hollow tube 74 is fixed to the partition member 76. The cooling water reservoir 75 is brought into communication with a cooling water inlet 23 by the hollow tube 74. Cooling water outlets 77 provided at the upper ends of the blades 15 communicate with the cooling water reservoir 75. The SSR 13E meets the condition of Inequality (1).

In case of operating a boiling water reactor whose core is loaded with the fuel assemblies 73 of this embodiment, each of the SSRs 13E gives forth the same functions as those of the SSR 13 owing to a cooling water raising path 21 and the cooling water lowering path 22. In addition, part of cooling water having flowed in from the cooling water inlet 23 passes through the interior of the hollow tube 74 and reaches the cooling water reservoir 75, and it flows out of the SSR 13E through the cooling water outlets 77. Even when the SSR 13E is in the state of Fig. 9A, the cooling water reservoir 75 is filled up with the cooling water. A fissionable material existing at the upper end part of each fuel rod 4 of the fuel assembly 73 has its burnup promoted by the moderating function of the cooling water in the cooling water reservoir 75, more than in the fuel assembly 12. For this reason, the fuel assembly 73 can relieve the degree of variation in an axial power distribution during the spectral shift operation. The fuel assembly 73 can produce effects similar to those of the fuel assembly 12.

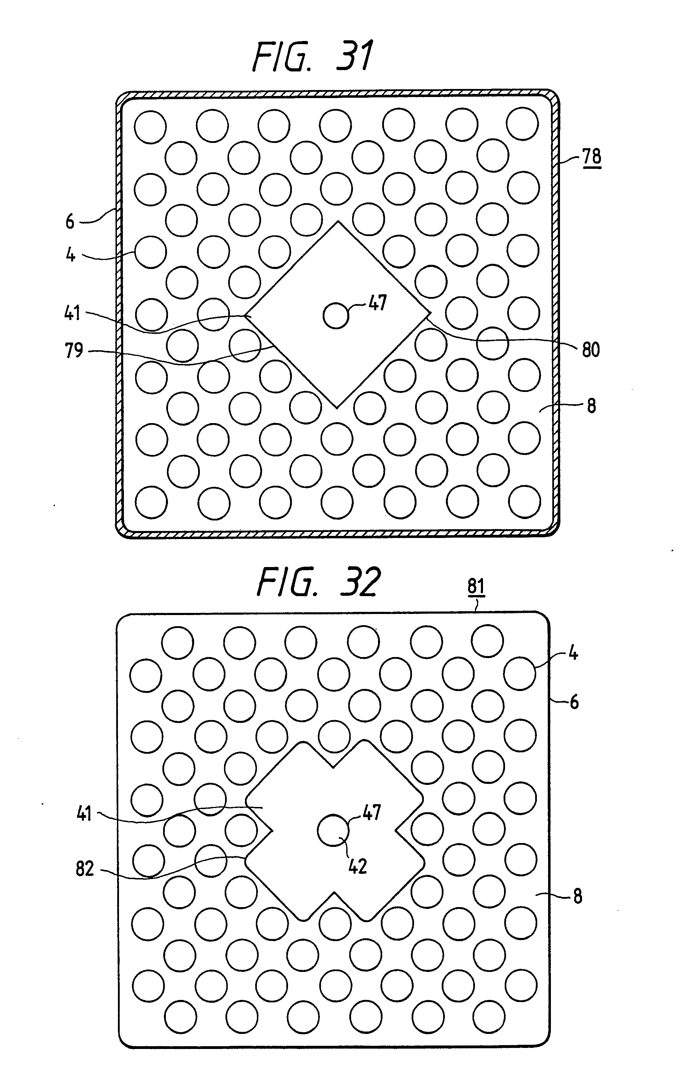

In the fuel assemblies having the SSRs as thus far described, the SSRs exhibit the cruciform cross sections. An embodiment of a fuel assembly which is furnished with an SSR having a different cross-sectional shape, is shown in Fig. 31. The fuel assembly 78 of this embodiment is such that the SSR 79 is arranged at the central part of the fuel assembly 1. The SSR 79 is almost the same as the SSR 46 shown in Fig. 10A. A point of difference is that, whereas the cross section of the outer tube 48 of the SSR 46 is a circle, the cross section of the outer tube 80 of the SSR 79 is a square. When viewed in cross section, the outer tube 80 occupies a region in which nine fuel rods 4 arrayed in 3 rows x 3 columns can be arranged. A cooling water raising path 41 is formed between the outer tube 80 and an inner tube 47. The SSR 79 satisfies the condition of Inequality (1). Likewise to the SSR 13 (Fig. 18), the SSR 79 is supported by the upper tie plate and lower tie plate of the fuel assembly 78.

The fuel assembly 78 produces effects similar to those of the fuel assembly 12. Since, however, the number of fuel rods 4 adjoining the SSR 79 in the fuel assembly 78 is smaller than that of the fuel rods 4 adjoining the SSR 13 in the fuel assembly 12, the effect of the increase of the fuel economy (rise of the degree of burnup) based on the spectral shift becomes lower than in the fuel assembly 12. Even in a case where the crosssectional areas of the SSRs are equal, the SSR of the cruciform cross section is larger in the number of the adjacent fuel rods than the SSR of the square cross section.

Another embodiment of the present invention in which an SSR is applied to the fuel assembly 6 shown in Fig. 5, is shown in Fig. 32. The fuel assembly 81 of this embodiment is such that the SSR 82 of cruciform cross section is centrally arranged. The fuel assembly 81 has seventy-two fuel rods 4. Likewise to the SSR 79, the SSR 82 is structurally identical to the SSR 46 except the shape of an outer tube. The outer tube of the SSR 82 has a cruciform cross section. Likewise to the SSR 13, the SSR 82 is supported by the upper and lower tie plates. Further, the SSR 82 fulfills the condition of Inequality (1). The fuel assembly 81 produces effects similar to those of the fuel assembly 12.

The fuel assemblies having the SSRs as described above satisfy Inequality (1). Each of these fuel assemblies, however, may well be furnished with an SSR in which the cross-sectional area of a cooling water raising path is made larger than that of a cooling water lowering path.

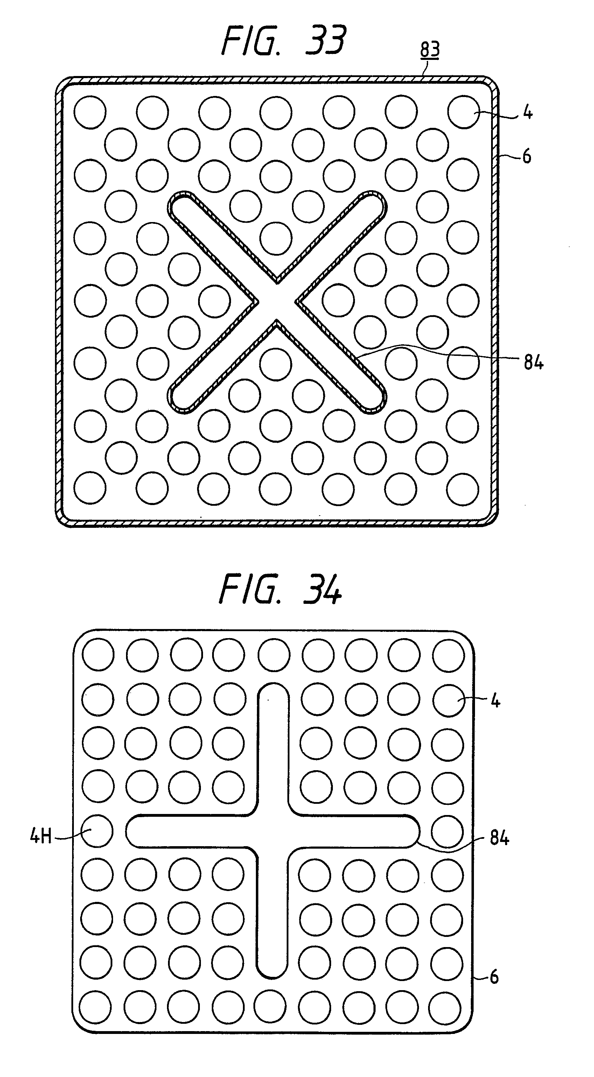

A fuel assembly which is another embodiment of the present invention, is shown in Fig. 33. The fuel assembly 83 of this embodiment is such that a water rod 84 of cruciform cross section is arranged at the central part of the fuel assembly 1 (Fig. 1). The fuel assembly 83 has seventy-two fuel rods 4. Likewise to the SSR 13, the water rod 84 has its side ends opposed toward the corners of the channel box 6 and occupies a region capable of arranging thirteen fuel rods 4. The water rod 84 is supported by the upper and lower tie plates. The cross-sectional area and cross-sectional shape of the water rod 84 are equal to those of the blades 15 of the SSR 13.

The fuel assembly 83 produces the same effects as those of the fuel assembly 1. Further, in the fuel assembly 83, the water rod 84 having the cruciform cross section is arranged so as to oppose the side ends thereof toward the corners of the channel box 6, so that the cross-sectional area of the water rod 84 can be enlarged. Moreover, the number of the fuel rods 4 adjacent to the water rod 84 can be increased. Owing to these facts, the fuel assembly 83 heightens the effect of flattening a thermal neutron flux and decreases the power peaking.

It is also considered to apply the cruciform water rod 84 to the fuel assembly in Fig. 3B. Such a structure is shown in Fig. 34. The fuel assembly in Fig. 34 has fuel rods 4 arranged in the shape of a square lattice of 9 rows x 9 columns, and has the water rod 84 located centrally. The fuel rods 4 are in a number of 68. The respective side ends of the water rod 84 face the central parts of the side walls of the corresponding latera of a channel box 6. In the fuel assembly in Fig. 34, only one fuel rod 4H exists between each side end of the water rod 84 and the channel box 6. The position of the fuel rod 4H is a region where the thermal neutron flux density is high under the influence of a water gap even in the state in which the water rod 84 does not exist. Therefore, even when the water rod 84 adjoins the fuel rod 4H, the effect thereof is low. To the contrary, a demerit due to the decrease of the number of fuel rods attributed to the arrangement of the water rod 84 of large cross-sectional area is serious. The fuel assembly 83 can eliminate the aforementioned problem involved in the fuel assembly of Fig. 34. Although the cross-sectional areas of the water rods are equal, the number of the fuel rods 4 becomes larger by four in the fuel assembly 83 than in the fuel assembly of Fig. 34. The same holds true also of the fuel assemblies 12, 52, 58, 61, 67 and 73, in comparison with the case where the water rod 84 in the fuel assembly of Fig. 34 is replaced with the cruciform SSR of equal cross-sectional area.

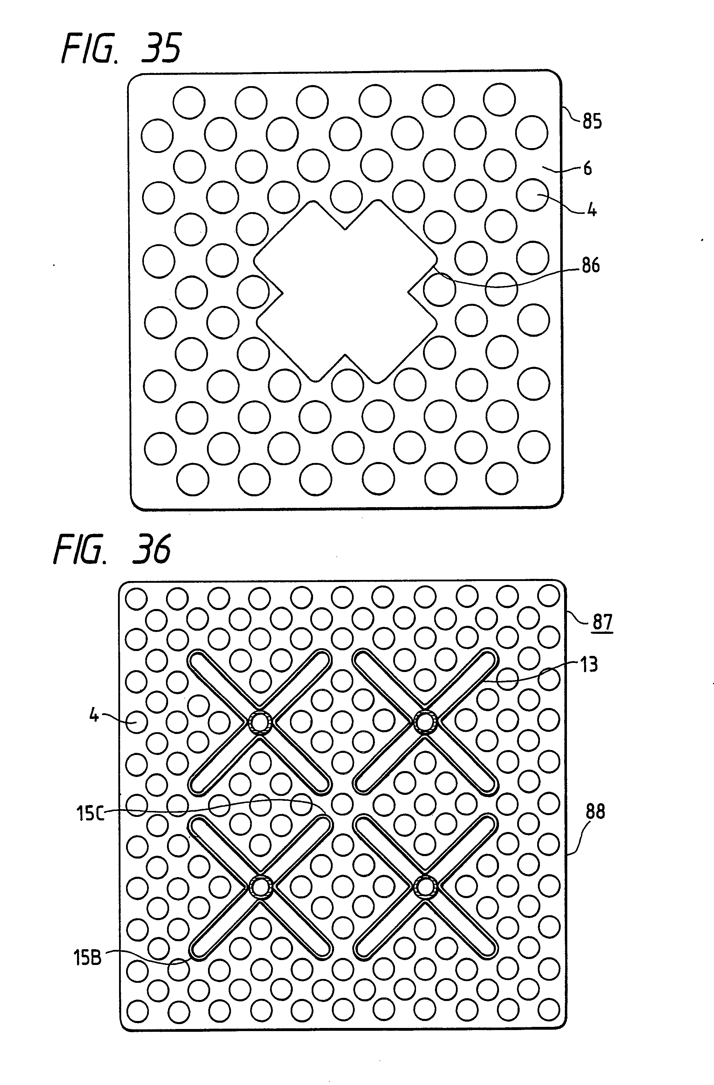

Fig. 35 shows a fuel assembly which is another embodiment of the present invention. The fuel assembly 85 of this embodiment is such that the SSR 82 of the fuel assembly 81 is replaced with a water rod 86. The cross-sectional area and the cross-sectional shape of the water rod 86 are equal to those of the outer tube of the SSR 82.

The fuel assembly 85 of this embodiment produces effects similar to those of the fuel assembly 11. Further, it produces the same effect as that of the fuel assembly 83 because the cross-sectional area of the water rod 86 is large.

Fig. 36 shows a fuel assembly being another embodiment of the present invention in which the structure of the fuel assembly 12 is applied to a large-sized fuel assembly, for example, a fuel assembly shown in Fig. 1 in the official gazette of Japanese Patent Application Laid-Open No. 63-25592. The fuel assembly 87 of this embodiment has the array of fuel rods 4 configured of the combination of a fuel rod array of square lattice in 11 rows x 11 columns and a fuel rod array of square lattice in 10 rows x 10 columns, just as the square lattice array 7A and the square lattice array 7B are combined in the fuel assembly 1. Numeral 88 designates a channel box. Four SSRs 13 are arranged among the fuel rods 4 as shown in Fig. 36. One pair of opposing side ends 15B and 15C of each SSR 13 face the opposing corners of the channel box 88. Such a fuel assembly 87 can produce effects similar to those of the fuel assembly 12.

## Claims

1. A fuel assembly (1) having a lower tie plate (3), and a plurality of fuel rods (4) whose lower end parts are supported by the lower tie plate (3);
**characterized** in that
said fuel rods (4) are in an array configured of a combination of a plurality of square lattice arrays (7A-7B) thereof which are substantially parallel to side surfaces of said lower tie plate (3), and that the fuel rod constituting one of said square lattice arrays is arranged between the fuel rods constituting another of said square lattice arrays (7A-7B).

2. A fuel assembly (1) having a lower tie plate (3), and a plurality of fuel rods (4) whose lower end parts are supported by the lower tie plate (3);
characterized in that
said fuel rods (4) are in an array (7A, 7B) configured of a combination of a plurality of square lattice arrays (7A, 7B) thereof which are substantially parallel to side surfaces of said lower tie plate (3), and that, in the combined state, another square lattice array which differs in inclination from said square lattice arrays is formed.

3. A fuel assembly (1) having a lower tie plate (3), and a plurality of fuel rods (4) whose lower end parts are supported by the lower tie plate (3),
characterized in that
said fuel rods (4) are in an array configured of a combination of a plurality of square lattice arrays (7A, 7B) thereof which are substantially parallel to side surfaces of said lower tie plate, and that in the combined state, the fuel rods (10) located at an outermost layer of said fuel assembly (1) and the fuel rods located at an adjacent layer inside said outermost layer are arranged so as to substantially form right-angled isosceles triangles at all side surface parts of said fuel assembly.

4. A fuel assembly (11) having a lower tie plate, and a plurality of fuel rods (4) whose lower end parts are supported by a fuel rod supporting portion of the lower tie plate,
characterized in that
said fuel rods (4) are in an array (7C, 7D) configured of a combination of a plurality of square lattice arrays thereof which are substantially parallel to side surfaces of said lower tie plate (3), wherein the fuel rod constituting one of said square lattice arrays is arranged between the fuel rods (4) constituting another of said square lattice arrays, and that a spectral shift rod (40) is comprised including a coolant raising path which is open below said fuel rod supporting portion and extends above it and which is arranged among said fuel rods (4), as well as a coolant lowering path which is open above said fuel rod supporting portion and which guides downwards a coolant guided by said coolant raising path, wherein a coolant flow passage area of said coolant raising path is larger than that of said coolant lowering path.

5. A fuel assembly according to Claim 4, wherein the coolant flow passage area of said coolant raising path (41) is larger than 25 times that of said coolant lowering path (42).

6. A fuel assembly according to Claim 4, wherein said spectral shift rod (40) has a cruciform cross section, and side ends thereof are directed toward the fuel rods located at corner parts of said fuel assembly (1).

7. A fuel assembly according to Claim 4, wherein said coolant lower path (42) lies at an axial position of said spectral shift rod (40).

8. A fuel assembly according to Claim 6, wherein said spectral shift rod (40) includes a member in which said coolant lowering path (42) is formed, and blades which are attached to said member so as to extend in four directions and in which said coolant raising path (41) is formed.

9. A fuel assembly according to Claim 2,
characterized in that
said lower end parts are supported by a fuel rod supporting portion of the lower tie plate and in that a spectral shift rod (40) is comprised including a coolant raising path (41) which is open below said fuel rod supporting portion and extends above it and which is arranged among said fuel rods, as well as a coolant lowering path (42) which is open above said fuel rod supporting portion and which guides downwards a coolant guided by said coolant raising path, wherein a coolant flow passage area of said coolant raising path is larger than that of said coolant lowering path.

10. A fuel assembly according to Claim 3, characterized in that the lower end parts of said fuel rods are supported by a fuel rod supporting portion of the lower tie plate; and in that a spectral shift rod (40) is comprised including a coolant raising path (41) which is open below said fuel rod supporting portion and extends above it and which is arranged among said fuel rods, as well as a coolant lowering path which is open above said fuel rod supporting portion and which guides downwards a coolant guided by said coolant raising path (41), wherein a coolant flow passage area of said coolant raising path (41) is larger than that of said coolant lowering path (42).

11. A spectral shift rod (40) comprising a first coolant path which has a coolant inlet at one end part thereof and which extends in an axial direction of said spectral shift rod (40), and a second coolant path which is connected to said first coolant path so as to invert and guide a coolant guided by said first coolant path and which has a coolant outlet located between its part connected with said first coolant path and said coolant inlet, wherein a cross-sectional area of said first coolant path is larger than that of said second coolant path, and said coolant paths are formed into a cruciform cross section.

12. A nuclear reactor comprising fuel assemblies in each of which fuel rods (4) supported by a fuel rod supporting portion of a lower tie plate (3) are in an array configured of a combination of a plurality of square lattice arrays thereof that are substantially parallel to side surfaces of said lower tie plate (3), wherein the fuel rod constituting one of said square lattice arrays is arranged between the fuel rods constituting another of said square lattice arrays, and in each of which a spectral shift rod (40) is provided including a coolant raising path (41) that is open below said fuel rod supporting portion and extends above it, as well as a coolant lowering path (42) that is open above said fuel rod supporting portion, that is smaller in a coolant flow passage area than said coolant raising path and that guides downwards a coolant guided by said coolant raising path (41), control rods (4) each of which is inserted among said fuel assemblies, and means for regulating a flow rate of the coolant that is supplied to said fuel assemblies.

13. A nuclear reactor according to Claim 12, wherein the coolant flow passage area of said coolant raising path (41) is larger than 25 times that of said coolant lower path (42).

14. A power control method for a nuclear reactor loaded in its core with fuel assemblies in each of which fuel rods supported by a fuel rod supporting portion of a lower tie plate are in an array configured of a combination of a plurality of square lattice arrays thereof that are substantially parallel to side surfaces of said lower tie plate, wherein the fuel rod constituting one of said square lattice arrays is arranged between the fuel rods constituting another of said square lattice arrays, and in each of which a spectral shift rod is provided including a coolant raising path that is open below said fuel rod supporting portion and extends above it, as well as a coolant lowering path that is open above said fuel rod supporting portion, that is smaller in a coolant flow passage area than said coolant raising path and that guides downwards a coolant guided by said coolant raising path;

comprising the steps of controlling the reactor power by withdrawal of control rods inserted in said core, and controlling the reactor power by adjustments of liquid levels of said coolant formed in the spectral shift rods, not by the operation of withdrawing said control rods, after the reactor power control operation based on the withdrawal of said control rods has ended.

15. A power control method for a nuclear reactor loaded in its core whit fuel assemblies in each of which fuel rods supported by a fuel rod supporting portion of a lower tie plate are in an array configured of a combination of a plurality of square lattice arrays thereof that are substantially parallel to side surfaces of said lower tie plate, wherein the fuel rod constituting one of said square lattice arrays is arranged between the fuel rods constituting another of said square lattice arrays, and in each of which a spectral shift rod is provided including a coolant raising path that is open below said fuel rod supporting portion and extends above it, as well as a coolant lowering path that is open above said fuel rod supporting portion, that is smaller in a coolant flow passage area than said coolant raising path and that guides downwards a coolant guided by said coolant raising path;

comprising the steps of controlling the reactor power by operations of control rods inserted in said core, at an initial stage of a fuel cycle period, and controlling the reactor power by adjustments of liquid levels of said coolant formed in the spectral shift rods without performing the control rod operations, in most of said fuel cycle period after the control rod operations.

FIG. 1

FIG. 2

EP 0 365 025 A2

## FIG. 3A

## FIG. 3B

# FIG. 4

INFINITE MULTIPLICATION FACTOR

ENRICHMENT INCREASE

DURING OPERATING OF REACTOR

DURING COLD SHUT-DOWN

RATIO OF H/U

# FIG. 5

## FIG. 6A

## FIG. 6B

# FIG. 7

# FIG. 8

TOTAL LENGTH 3.7m
INNER DIAMETER OF OUTER TUBE 30mm
INNER DIAMETER OF INNER TUBE 22mm

JUMP WIDTH OF AVERAGE VOID FRACTION

AVERAGE VOID FRACTION IN THE SSR

PRESSURE DIFFENTIAL BETWEEN THE OUTLET AND THE INLET OF THE SSR [MPa]

EP 0 365 025 A2

EP 0 365 025 A2

FIG. 9A    FIG. 9B    FIG. 9C

FIG. 10A

FIG. 10B

FIG. 10C

## FIG. 12

TOTAL LENGTH 3.6m
INNER DIAMETER 30mm
OF OUTER TUBE
THICKNESS OF 1mm
INNER TUBE
INNER DIAMETER
OF INNER TUBE

—·—·— 4mm
———— 5mm
– – – – 6mm

AVERAGE VOID FRACTION IN THE SSR (%)

PRESSURE DIFFERENTIAL BETWEEN THE OUTLET AND THE INLET OF THE SSR [ Pa ]

## FIG. 11

TOTAL LENGTH 3.6m
INNER DIAMETER 30mm
OF OUTER TUBE
THICKNESS OF 1mm
INNER TUBE
INNER DIAMETER
OF INNER TUBE

———— 5mm
– – – – 20.2mm
—·—·— 26mm

AVERAGE VOID FRACTION IN THE SSR (%)

PRESSURE DIFFENTIAL BETWEEN THE OUTLET AND THE INLET OF THE SSR [ Pa ]

# FIG. 14

INNER DIAMETER 30mm
OF OUTER TUBE
THICKNESS OF 1 mm
INNER TUBE
INNER DIAMETER 5 mm
OF INNER TUBE
TOTAL LENGTH

2.4 m
3.6 m
4.8 m

AVERAGE VOID FRACTION IN THE SSR (%)

PRESSURE DIFFERENTIAL BETWEEN
THE OUTLET AND THE INLET OF THE
S S R [ Pa ]

# FIG. 13

INNER DIAMETER 30 mm
OF OUTER TUBE
THICKNESS OF 1 mm
INNER TUBE
INNER DIAMETER 6 mm
OF INNER TUBE
TOTAL LENGTH

2.4 m
3.6 m
4.8 m

AVERAGE VOID FRACTION IN THE SSR (%)

PRESSURE DIFFERENTIAL BETWEEN
THE OUTLET AND THE INLET OF THE
S S R [ Pa ]

FIG. 16

FIG. 17

FIG. 15

FIG. 18

# FIG. 19

# FIG. 20

## FIG. 21

INFINITE MULTIPLICATION FACTOR

LARGE

SMALL

DURING OPERATING OF REACTOR

L

Mx

SMALL ←                    → LARGE

TOTAL CROSS SECTION OF THE MODERATOR REGION WHICH ALL SSR IN A FUEL ASSEMBLY CONTAIN

## FIG. 22

52

6

54

55

8

4

57

56    53    13A

EP 0 365 025 A2

## FIG. 23

## FIG. 24

FIG. 25

FIG. 26

EP 0 365 025 A2

FIG. 27

FIG. 29

# FIG. 28

# FIG. 30

## FIG. 31

## FIG. 32

## FIG. 33

## FIG. 34

## FIG. 35

## FIG. 36